(19)

Europäisches
Patentamt
European
Patent Office
Office européen
des brevets

(11) **EP 4 332 274 A1**

(12) **EUROPEAN PATENT APPLICATION**
published in accordance with Art. 153(4) EPC

(43) Date of publication:
**06.03.2024   Bulletin 2024/10**

(21) Application number: **22795921.0**

(22) Date of filing: **28.04.2022**

(51) International Patent Classification (IPC):
*C25D 7/06* (2006.01)        *C25D 5/12* (2006.01)
*C25D 5/16* (2006.01)        *C25D 5/26* (2006.01)
*C25D 5/50* (2006.01)        *H01M 4/66* (2006.01)

(52) Cooperative Patent Classification (CPC):
**C25D 5/12; C25D 5/16; C25D 5/36; C25D 5/50;
C25D 7/06; H01M 4/66;** Y02E 60/10

(86) International application number:
**PCT/JP2022/019465**

(87) International publication number:
**WO 2022/231008 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **28.04.2021   JP 2021076894**

(71) Applicant: **Toyo Kohan Co., Ltd.
Tokyo 141-8260 (JP)**

(72) Inventors:
  • **TSUTSUMI, Etsuro
    Kudamatsu-shi, Yamaguchi 744-8611 (JP)**
  • **UENO, Misato
    Kudamatsu-shi, Yamaguchi 744-8611 (JP)**

  • **KATSURA, Keishi
    Kudamatsu-shi, Yamaguchi 744-8611 (JP)**
  • **HORIE, Shinichirou
    Kudamatsu-shi, Yamaguchi 744-8611 (JP)**
  • **HARADA, Satoko
    Kudamatsu-shi, Yamaguchi 744-8611 (JP)**
  • **KOYANAGI, Toshifumi
    Kudamatsu-shi,Yamaguchi 744-8611 (JP)**
  • **OBATA, Shunki
    Kudamatsu-shi, Yamaguchi 744-8611 (JP)**
  • **YOSHIOKA, Koh
    Kudamatsu-shi, Yamaguchi 744-8611 (JP)**

(74) Representative: **Hoffmann Eitle
Patent- und Rechtsanwälte PartmbB
Arabellastraße 30
81925 München (DE)**

(54) **SURFACE-TREATED STEEL FOIL FOR CURRENT COLLECTORS**

(57)     [Object]
To provide a surface treated steel foil for a current collector, the surface treated steel foil having suitable hydrogen barrier properties.
[Solving Means]
A surface treated steel foil for a current collector, the surface treated steel foil having a first surface and a second surface located on a side opposite to the first surface, includes a base material formed of a steel and an iron-nickel alloy layer that is laminated on the base material on the first surface side and/or the second surface side. The iron-nickel alloy layer contains $Fe_1Ni_1$ as an alloy phase. With respect to the surface including the alloy layer, the ratio of the maximum value of diffraction intensity of a $Fe_1Ni_1(311)$ plane and the maximum value of diffraction intensity of a $Fe(211)$ plane in X-ray diffraction satisfies the following formula (1):

$$I(Fe_1Ni_1(311))/I(Fe(211)) \geq 0.015 \cdots (1).$$

FIG. 1(a)

FIG. 1(b)

FIG. 1(c)

**Description**

[Technical Field]

The present invention relates to a surface treated steel foil for a current collector, the surface treated steel foil being to be used particularly suitably for a current collector of a secondary battery or the like.

[Background Art]

Conventionally, a nickel hydrogen battery and a lithium ion battery have been known as a secondary battery to be adopted for in-vehicle use or the like. As kinds of electrode of these secondary batteries, there are known a monopolar electrode in which positive electrode layers or negative electrode layers are formed on both surfaces of a current collector, and a bipolar electrode in which a positive electrode layer (positive electrode active material layer) and a negative electrode layer (negative electrode active material layer) are formed on both surfaces of a current collector.

A bipolar battery is configured by laminating the above-mentioned bipolar electrodes with an electrolyte, a separator, or the like interposed therebetween, and accommodating them in a single battery case. With this configuration, the electrodes can be laminated in a series circuit, and hence, it is known that the internal resistance of the battery can be reduced, and it is easy to increase the working voltage and the output. In addition, together with battery performance, by omitting or reducing the number of members such as tab leads for taking out a current by battery design, the volume or weight of the battery can be reduced as compared to the conventional batteries using monopolar electrodes, and hence, it is considered that enhancement of a battery volume and weight energy density can be realized.

For example, PTL 1 mentioned below discloses use of a metallic foil such as a nickel foil as a current collector of a bipolar battery.

[Citation List]

[Patent Literature]

[PTL 1]
Japanese Patent Laid-open No. 2020-053401

[Summary]

[Technical Problem]

In proceeding with the development of a nickel-plated surface treated steel foil as a suitable metallic foil for secondary battery use, the present inventors have found out that deterioration of battery performance can be suppressed by restraining permeation of hydrogen in the surface treated steel foil.

For example, in a nickel-hydrogen battery, use is made of hydrogen, generally, a hydrogen occluding alloy, as an active material for a negative electrode. In the case of a conventional monopolar electrode, it has been sufficient that battery members such as current collectors have liquid electrolyte resistance according to the kind of battery at their surfaces; on the other hand, in the case of the above-mentioned bipolar electrode, a phenomenon in which hydrogen present on the negative electrode side moves in the metallic material to permeate to the positive electrode side is likely to occur, and the present inventors have reached a conclusion that battery performance is liable to be lowered in the case where such a permeation phenomenon occurs.

The present invention has been made in consideration of a solution to such a problem, and it is an object of the present invention to provide a surface treated steel foil that has hydrogen barrier properties particularly suitable for a current collector.

[Solution to Problem]

In order to solve the problem exemplified above, a surface treated steel foil for a current collector in one embodiment of the present invention is (1) a surface treated steel foil for a current collector, the surface treated steel foil having a first surface and a second surface located on a side opposite to the first surface, the surface treated steel foil including a base material formed of a steel and an iron-nickel alloy layer laminated on the base material on the first surface side and/or the second surface side, in which $Fe_1Ni_1$ is contained as an alloy phase in the iron-nickel alloy layer, and, with respect to the surface that includes the alloy layer, the ratio between the maximum value of diffraction intensity of a $Fe_1Ni_1(311)$ plane and the maximum value of diffraction intensity of a $Fe(211)$ plane in X-ray diffraction satisfies the following formula (1):

$$I(Fe_1Ni_1(311))/I(Fe(211)) \geq 0.015 \cdots (1)$$

In the surface treated steel foil for a current collector described in (1) above, (2) it is preferable that at least one of $Fe_1Ni_3$ and $Fe_3Ni_2$ be further contained as an alloy phase in the iron-nickel alloy layer.

In addition, in the surface treated steel foil for a current collector described in (2) above, (3) it is preferable that, with respect to the surface including the iron-nickel alloy layer, the ratio of the maximum value of diffraction intensity of the $Fe_1Ni_1(311)$ plane, the maximum value of diffraction intensity of a $Fe_1Ni_3(311)$ plane, and the maximum value of diffraction intensity of a $Fe_3Ni_2(311)$ plane in X-ray diffraction satisfy the following formula (2):

$$I(Fe_1Ni_1(311))/(I(Fe_1Ni_1(311)) + I(Fe_1Ni_3(311)) +$$

$$I(Fe_3Ni_2(311))) \geq 0.2 \cdots (2)$$

In the surface treated steel foil for a current collector described in (3) above, (4) it is preferable that, with respect to the surface including the iron-nickel alloy layer, the ratio of the maximum value of diffraction intensity of the $Fe_1Ni_1(311)$ plane, the maximum value of diffraction intensity of the $Fe_1Ni_3(311)$ plane, and the maximum value of diffraction intensity of the $Fe_3Ni_2(311)$ plane satisfy the following formula (3):

$$I(Fe_1Ni_3(311))/(I(Fe_1Ni_1(311)) + I(Fe_1Ni_3(311)) +$$

$$I(Fe_3Ni_2(311))) \leq 0.5 \cdots (3)$$

In the surface treated steel foil for a current collector described in any one of (1) to (4) above, (5) it is preferable that the thickness of the surface treated steel foil as a whole be not more than 300 $\mu$m.

In the surface treated steel foil for a current collector described in any one of (1) to (5) above, (6) it is preferable that the base material be a low carbon steel or an ultra-low carbon steel.

In the surface treated steel foil for a current collector described in any one of (1) to (6) above, (7) it is preferable that the deposition amount of nickel in the iron-nickel alloy layer be 0.8 to 53.4 $g/m^2$.

In the surface treated steel foil for a current collector described in any one of (1) to (7) above, (8) it is preferable that the iron-nickel alloy layer be formed on both the first surface side and the second surface side, and the total of deposition amounts of nickel in the iron-nickel alloy layers on both surface sides be 1.5 to 53.4 $g/m^2$.

In the surface treated steel foil for a current collector described in any one of (1) to (8) above, (9) it is preferable that the surface treated steel foil further include a metallic layer formed on the iron-nickel alloy layer, the metallic layer being a nickel layer.

In the surface treated steel foil for a current collector described in (9) above, (10) it is preferable that the total of nickel amounts in the iron-nickel alloy layer and the nickel layer be 2.0 to 53.4 $g/m^2$.

In the surface treated steel foil for a current collector described in any one of (1) to (10) above, (11) it is preferable that a hydrogen permeation current density that is electrochemically measured be not more than 15 $\mu$A/cm$^2$, where the hydrogen permeation current density is an increment of an oxidation current measured on a hydrogen detection side when a potential of -1.5 V is applied on a hydrogen generation side under a condition in which a potential on the hydrogen detection side is +0.4 V, in a liquid electrolyte at 65°C while a reference electrode for potentials on the hydrogen detection side and the hydrogen generation side is set to be Ag/AgCl.

In the surface treated steel foil for a current collector described in any one of (1) to (11) above, (12) it is preferable that a roughened nickel layer be formed at an outermost surface on the first surface side or the second surface side, and a three-dimensional surface property parameter Sa of the roughened nickel layer be 0.2 to 1.3 um.

In the surface treated steel foil for a current collector described in any one of (1) to (12) above, (13) it is preferable that the surface treated steel foil have a first surface on which a hydrogen occluding alloy is disposed and a second surface located on a side opposite to the first surface, and the surface treated steel foil include a base material formed of a steel and an iron-nickel alloy layer that is laminated on the base material on the first surface side and/or the second surface side and that restrains permeation or diffusion of hydrogen ions occluded in the hydrogen occluding alloy into the base material.

[Advantageous Effects of Invention]

According to the present invention, it is possible to provide a surface treated steel foil for a current collector, the surface treated steel foil having hydrogen barrier properties suitable for a battery, especially for a bipolar battery.

[Brief Description of Drawing]

[FIG. 1(a)]

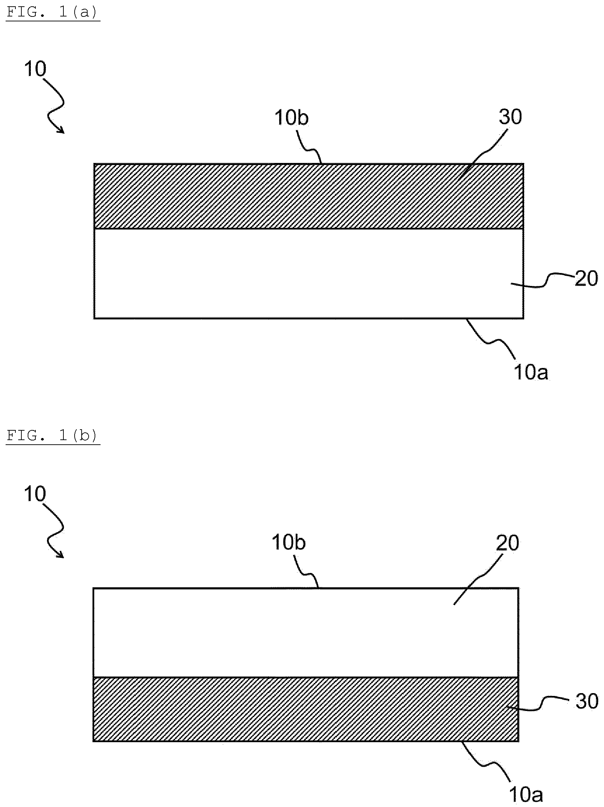

FIG. 1(a) is a diagram schematically depicting a surface treated steel foil for a current collector of the present embodiment.
[FIG. 1(b)]
FIG. 1(b) is a diagram schematically depicting the surface treated steel foil for the current collector of the present embodiment.
[FIG. 1(c)]

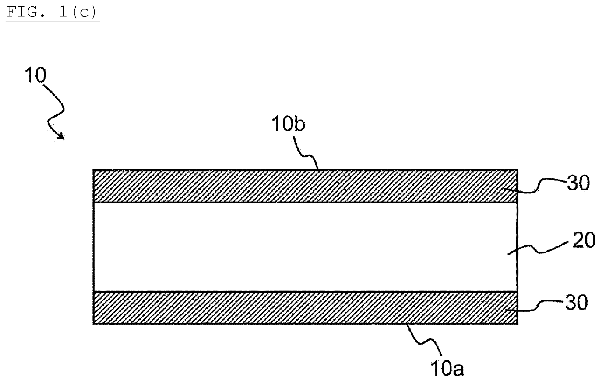

FIG. 1(c) is a diagram schematically depicting the surface treated steel foil for the current collector of the present embodiment.
[FIG. 2(a)]

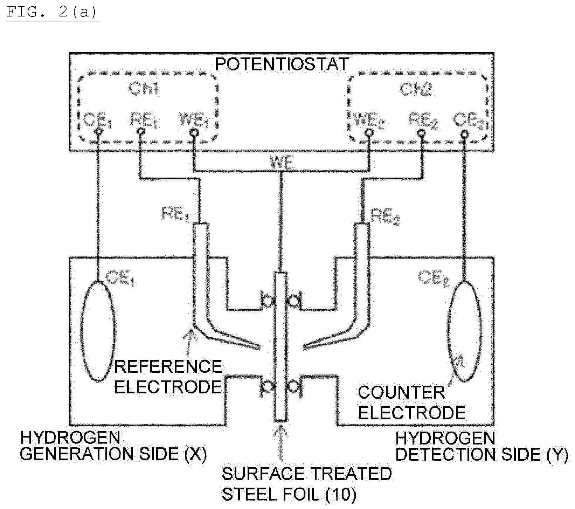

FIG. 2(a) is a schematic diagram of a device for measuring hydrogen barrier properties of a surface treated steel foil 10 for a current collector of the present embodiment.
[FIG. 2(b)]

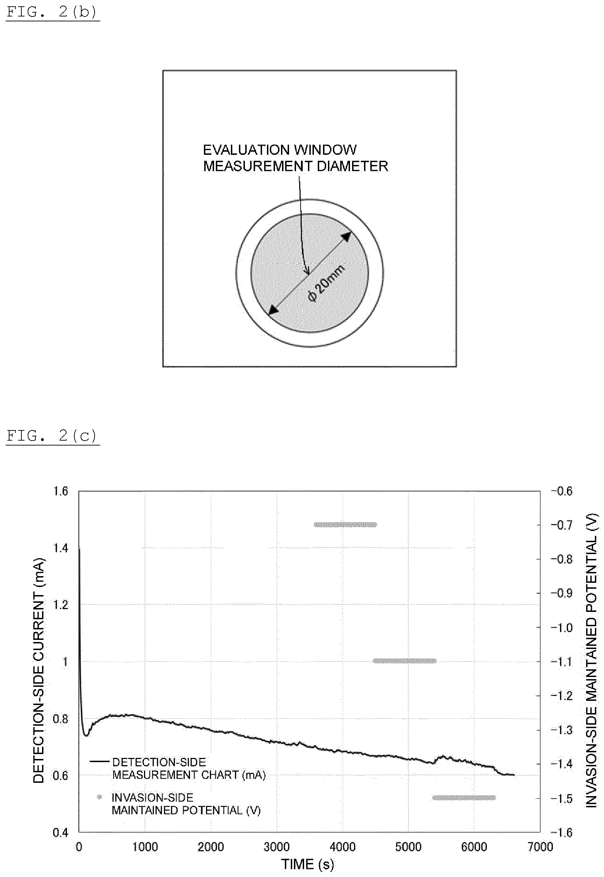

FIG. 2(b) is a schematic diagram of the device for measuring hydrogen barrier properties of the surface treated steel foil 10 for the current collector of the present embodiment.
[FIG. 2(c)]
FIG. 2(c) is an explanation diagram of a method for measuring hydrogen barrier properties of the surface treated steel foil 10 for the current collector of the present embodiment.
[FIG. 2(d)]

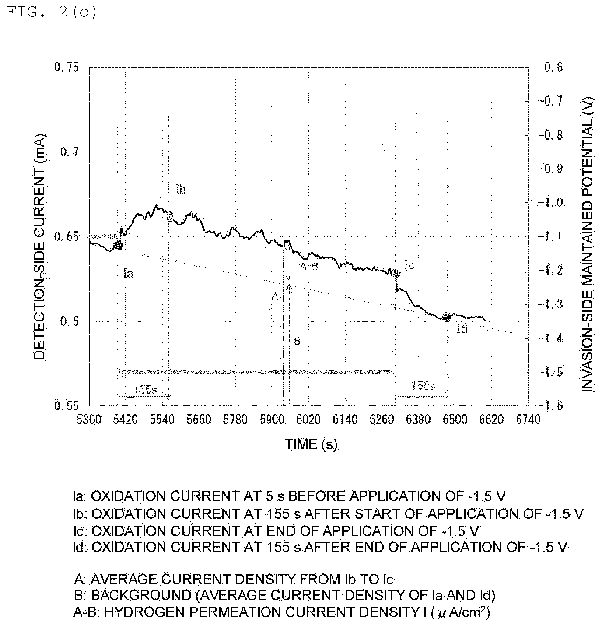

FIG. 2(d) is an explanation diagram of the method for measuring hydrogen barrier properties of the surface treated steel foil 10 for the current collector of the present embodiment.
[FIG. 2(e)]

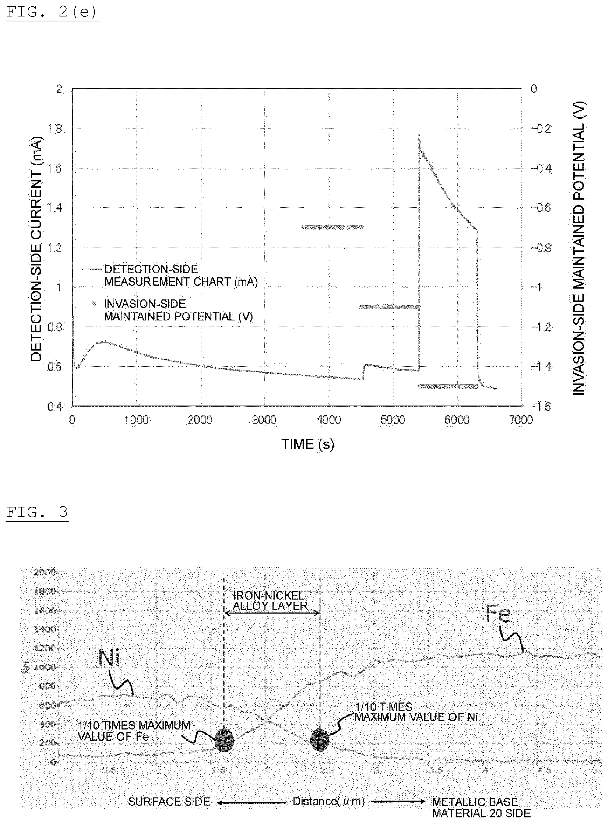

FIG. 2(e) is an explanation diagram of the method for measuring hydrogen barrier properties of the surface treated steel foil 10 for the current collector of the present embodiment.
[FIG. 3]
FIG. 3 is a diagram for explaining a method for calculating the thickness of an iron-nickel alloy layer in the present embodiment.
[FIG. 4]

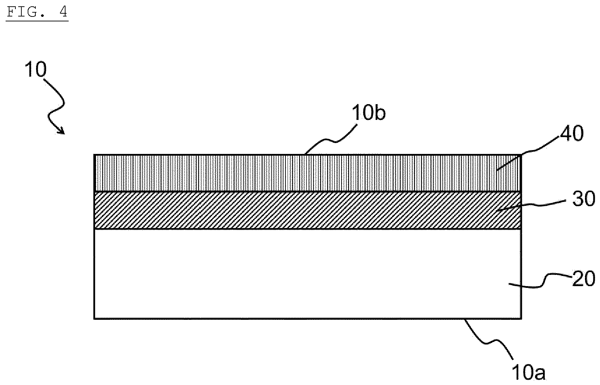

FIG. 4 is a diagram schematically depicting a surface treated steel foil for a current collector of another embodiment.
[FIG. 5(a)]

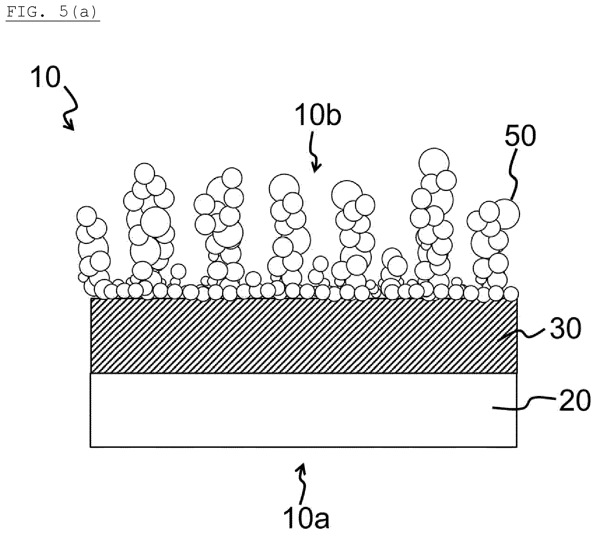

FIG. 5(a) is a diagram schematically depicting a surface treated steel foil for a current collector of another embodiment.
[FIG. 5(b)]

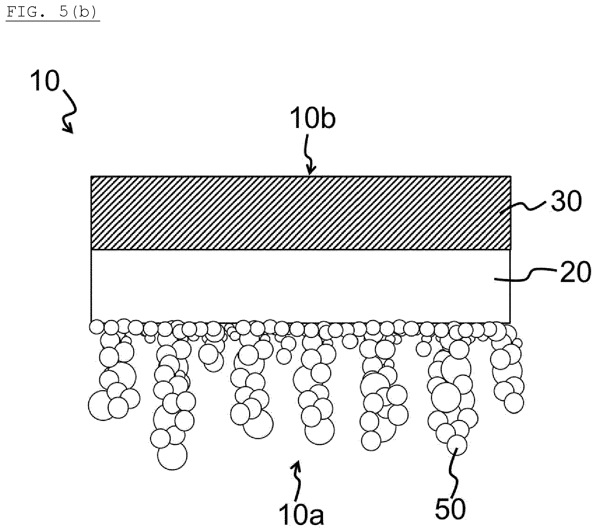

FIG. 5(b) is a diagram schematically depicting a surface treated steel foil for a current collector of another embodiment.
[FIG. 6]

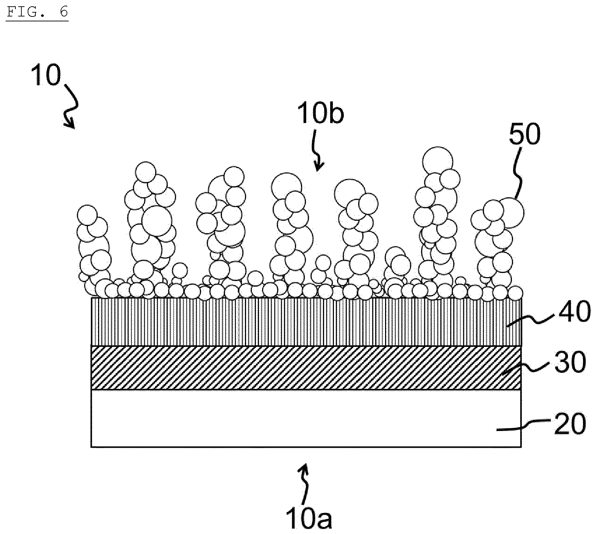

FIG. 6 is a diagram schematically depicting a surface treated steel foil for a current collector of another embodiment.

[Description of Embodiment]

«Surface treated steel foil 10 for current collector»

An embodiment for carrying out a surface treated steel foil for a current collector of the present invention will be described below.
FIG. 1 is a diagram schematically depicting an embodiment of a surface treated steel foil 10 for a current collector of the present invention. The surface treated steel foil 10 for the current collector of the present embodiment may be applied not only to a current collector of a bipolar battery but also to a current collector for a positive electrode or a negative electrode in a monopolar battery. The battery may be a secondary battery or a primary battery.
The surface treated steel foil 10 for the current collector of the present embodiment has a metallic base material 20 and an iron-nickel alloy layer 30. The surface treated steel foil 10 for the current collector has a first surface 10a and a second surface 10b on the side opposite to the first surface 10a. In the case where the surface treated steel foil 10 for the current collector of the present embodiment is used as a battery current collector for a battery including a hydrogen occluding alloy, on the side of the first surface 10a, there is disposed a hydrogen occluding alloy as a negative electrode material in assembling a battery. Meanwhile, on the side of the second surface 10b, there is disposed a positive electrode material in the case of a nickel-hydrogen battery of a bipolar electrode structure, for example.

The surface treated steel foil 10 for the current collector of the present embodiment is characterized by having the iron-nickel alloy layer 30 as described above. The iron-nickel alloy layer 30 may be disposed on the side of the above-mentioned second surface 10b as depicted in FIG. 1(a), or may be disposed on the side of the first surface 10a as depicted in FIG. 1(b). In addition, the iron-nickel alloy layer 30 may be disposed on both the side of the first surface 10a and the side of the second surface 10b as depicted in FIG. 1(c).

In addition, the iron-nickel alloy layer 30 may be disposed at an outermost surface of the surface treated steel foil 10 for the current collector as depicted in FIGS. 1(a) to 1(c), or may be disposed inside (at an intermediate position of) the surface treated steel foil 10 for the current collector as depicted in FIG. 4.

The iron-nickel alloy layer 30 has a function of restraining permeation or diffusion of hydrogen in the surface treated steel foil for the current collector.

<Metallic base material 20>

As a steel foil of the metallic base material 20 used for the surface treated steel foil 10 for the current collector of the present embodiment, an iron-based metallic base material containing Cr and other additive metallic elements in an amount of less than 1.0 wt% is preferable. Specifically, a low carbon steel (carbon content 0.01 to 0.15 wt%) represented by a low carbon aluminum-killed steel, an ultra low carbon steel having a carbon content of less than 0.01 wt%, or a non-ageing ultra low carbon steel obtained by adding Ti, Nb, or the like to the ultra low carbon steel is preferably used. In addition, the steel foil may be an electrolytic iron foil produced by electroplating, and the steel foil in the present embodiment includes a rolled steel foil and an electrolytic iron foil.

The thickness of the metallic base material 20 used for the surface treated steel foil 10 for the current collector of the present embodiment is preferably in the range of 10 to 300 um. In the case of use as a current collector of a battery in which a volume and weight energy density is considered to be important, the thickness is more preferably 10 to 200 $\mu$m, and further preferably 25 to 100 $\mu$m, in terms of strength, desired battery capacity, and the like. For measurement of the thickness of the metallic base material 20, thickness measurement by observation of a section by an optical microscope or a scanning electron microscope (SEM) is preferably used. In addition, as measurement of the thickness before a surface treatment, in other words, before nickel plating or iron-nickel alloy plating, thickness measurement by use of a micrometer or the like is applicable.

<Iron-nickel alloy layer 30>

The iron-nickel alloy layer 30 included in the surface treated steel foil 10 for the current collector of the present embodiment is an alloy layer containing iron (Fe) and nickel (Ni) and is an alloy layer including an alloy composed of iron and nickel (also called an "iron-nickel alloy" or an "Fe-Ni alloy"). Note that the state of the alloy composed of iron and nickel may be any of a solid solution, a eutectoid or eutectic, and a compound (intermetallic compound) or may include them in a coexistent state.

The iron-nickel alloy layer 30 included in the surface treated steel foil 10 for the current collector of the present embodiment may contain other metallic elements and unavoidable impurities insofar as the problem to be solved by the present invention can be solved. For example, the iron-nickel alloy layer 30 may contain metallic elements such cobalt (Co) and molybdenum (Mo) and additive elements such as boron (B). Note that the proportion of metallic elements other than iron (Fe) and nickel (Ni) in the iron-nickel alloy layer 30 is preferably not more than 10 wt%, more preferably not more than 5 wt%, and further preferably not more than 1 wt%. Since the iron-nickel alloy layer 30 may be a binary alloy substantially composed of only iron and nickel, the lower limit for the content of metallic elements other than unavoidable impurities is 0%. The kinds and amounts of the other metallic elements contained can be measured by known means such as an X-ray fluorescence (XRF) measuring device and glow discharge optical emission spectroscopy (GDS).

A method for forming the iron-nickel alloy layer 30 included in the surface treated steel foil 10 for the current collector of the present embodiment is preferably a method by plating or plating and a heat treatment, and examples of the plating include electroplating, electroless plating, hot dip coating, and dry plating. Of these plating methods, the electroplating method is particularly preferred in terms of cost, film thickness control, and the like.

For example, examples of the plating method include a method of forming an Ni plating layer on at least one surface of the metallic base material 20 by such a method as electroplating and thereafter diffusing iron (Fe) in the metallic base material 20 and nickel (Ni) by a thermal diffusion treatment or the like to effect alloying, and a method of forming an alloy layer by FeNi alloy plating. Note that these manufacturing methods will be described in detail later.

The iron-nickel alloy layer 30 in the surface treated steel foil 10 for the current collector in the present embodiment is characterized by containing an alloy phase of a crystal structure of $Fe_1Ni_1$. By providing this configuration, the hydrogen barrier properties suitable for a bipolar battery, constituting the object of the present invention, can be achieved.

Here, the reason why it is defined in the present invention to contain the alloy phase of the crystal structure of $Fe_1Ni_1$ in the iron-nickel alloy layer 30 is as follows.

In a process of repeating experiments for enhancing battery performance, the present inventors have found occurrence of a voltage drop (self-discharge) phenomenon due to an unknown cause and have found out that restraining permeation of hydrogen in the surface treated steel foil 10 for the current collector is effective for resolving the phenomenon.

The cause of occurrence of hydrogen permeation and the reason why the occurrence of the above-mentioned voltage drop (self-discharge) phenomenon can be restrained by restraining the hydrogen permeation in the surface treated steel foil 10 for the current collector have not yet been elucidated, but the present inventors have predicted as follows.

Specifically, in the present embodiment, in the case where the surface treated steel foil 10 for the current collector is used for an electrode of a bipolar battery, a hydrogen occluding alloy used as a negative electrode material is disposed on at least one surface side of the surface treated steel foil 10 for the current collector (on the side of the first surface 10a in the embodiment depicted in FIG. 1), and a positive electrode material is disposed on the opposite side. In this case, an environment in which hydrogen is abundant (negative electrode) and an environment in which hydrogen is little (positive electrode) are present on opposite sides of the surface treated steel foil 10 for the current collector, so that a hydrogen concentration gradient is generated. The present inventors have expected that, by permeation or movement of hydrogen through the surface treated steel foil 10 for the current collector due to some kind of trigger, the permeated hydrogen reacts on the positive electrode, to cause the occurrence of the above-mentioned voltage drop (self-discharge).

Such a voltage drop caused by permeation of hydrogen is accelerated in reaction as the number of states in which hydrogen is liable to permeate is larger in the environment of use of a battery, and it is considered that the length of time taken until the voltage drop occurs is shortened, in other words, deterioration of battery performance is accelerated. As a condition for hydrogen to be liable to permeate, it is considered that hydrogen is more liable to permeate as the above-mentioned hydrogen concentration gradient is greater. In addition to the hydrogen concentration gradient, it is considered that a state in which voltages are applied to both surfaces of the surface treated steel foil further accelerates the hydrogen permeation. In other words, in a battery using a hydrogen occluding alloy, a battery with a great concentration gradient such as a nickel-hydrogen battery, or a secondary battery with frequent charging and discharging, it is highly possible that the hydrogen permeation constitutes a cause of gradual lowering in battery performance with time. Meanwhile, the gradual lowering in the battery performance may largely come from other factors, and the hydrogen permeation phenomenon is difficult to recognize; hence, it has not been elucidated in the conventional use and development of monopolar batteries. During the present inventors' repetition of experiments in developing a surface treated steel foil for a current collector for use in bipolar batteries, they have found out that enhancement of hydrogen barrier properties of the iron-nickel alloy layer contributes to restraining of deterioration of battery performance. Therefore, the surface treated steel foil of the present embodiment is used suitably especially for a current collector in a bipolar battery, particularly in a battery using a hydrogen occluding alloy; in addition, the surface treated steel foil of the present embodiment can be suitably used also for other batteries which do not use a hydrogen occluding alloy but contain or generate hydrogen, since it is considered possible that such batteries might undergo gradual deterioration of battery performance due to hydrogen permeation that has not been recognized. For example, in alkaline secondary batteries, battery constituting members are substantially the same, like using an alkaline liquid electrolyte containing potassium hydroxide as a main constituent as with the nickel-hydrogen battery, exclusive of the use of zinc for the negative electrode in a nickel-zinc battery and the use of cadmium for the negative electrode in a nickelcadmium battery, and hence, the alkaline secondary batteries are characterized in that hydrogen is liable to be generated on the negative electrode side.

Therefore, although not as much as the nickel-hydrogen battery in which a large amount of hydrogen is stored in the hydrogen occluding alloy, when these batteries are made to be bipolar batteries of the bipolar type structure, it is considered that it is possible that the phenomenon of movement of hydrogen between the face and back of the current collector may occur, and similarly, battery performance is liable to be lowered by hydrogen permeation. Hence, the surface treated steel foil of the present embodiment can suitably be used also for bipolar type alkaline secondary batteries.

Besides, the present inventors obtained steel foils that have alloy layers different in iron and nickel contents, alloy structure, and the like, by modifying plating conditions, heat treatment conditions, and the like for forming the iron-nickel alloy layer 30. Further, the present inventors measured a hydrogen permeation current density (oxidation current value) in each of the steel foils, and analyzed metallic element contents, alloy structure, and the like.

During the present inventors' extensive and intensive investigations and repetition of experiments, they have found out that, by the presence of the alloy phase of the crystal structure of $Fe_1Ni_1$ in an amount of not less than a predetermined amount, surface treated steel foils having hydrogen barrier properties with higher stability can be obtained, and that the above-mentioned problem of hydrogen permeability can be solved. The reason why the $Fe_1Ni_1$ alloy phase,

of the crystal structures of the iron-nickel alloy, largely contributes to hydrogen barrier properties is considered as follows. The structure of this alloy phase has a low porosity and is considered to have narrow hydrogen passages. In addition, the alloy phase contains lattice strains attendant on the difference in atomic radius between Fe and Ni in a high density, so that it is considered that there are many hydrogen trap sites. As a result, it is considered that, by containing much of this alloy phase in the iron-nickel alloy layer 30, the hydrogen barrier properties of the surface treated steel foil are remarkably enhanced.

Here, the presence of $Fe_1Ni_1$ contained in the iron-nickel alloy layer 30 can be confirmed by use of X-ray diffraction (XRD) measurement. Specifically, in the case where a diffraction intensity is obtained at a diffraction angle $2\Theta = 91.23° \pm 0.11°$ in the X-ray diffraction measurement, the presence of a crystal plane (311) in the crystal structure of $Fe_1Ni_1$ contained in the iron-nickel alloy layer 30 can be confirmed, and it can be said that the iron-nickel alloy layer 30 contains an alloy phase of the crystal structure of $Fe_1Ni_1$.

Further, in the present embodiment, as the amount of $Fe_1Ni_1$ contained in the iron-nickel alloy layer 30, it is characterized that, in a plane of the iron-nickel alloy layer 30, the ratio of the maximum value of diffraction intensity of $Fe_1Ni_1$(311) plane to the maximum value of diffraction intensity of Fe(211) plane in the X-ray diffraction satisfies the following formula (1).

$$I(Fe_1Ni_1(311))/I(Fe(211)) \geq 0.015 \cdots (1)$$

Note that the above-mentioned ratio is preferably not less than 0.020 in terms of the object to obtain hydrogen barrier properties with higher stability. The ratio is more preferably not less than 0.025, and further preferably not less than 0.030 in terms of the object to obtain hydrogen barrier properties with further higher stability. In addition, while there is no upper limit for the above-mentioned ratio, the ratio is desirably less than 1, taking into consideration the thickness of iron in the iron-nickel alloy layer and the base material and strength balance thereof. When the ratio is less than 1, the control of mechanical properties of the surface treated steel foil for a current collector can be performed by the control of the state of iron in the base material, and the control becomes easy. On the other hand, it is considered that, in a state in which the above-mentioned ratio is not less than 1, the iron-nickel alloy layer which is hard as compared to iron in the base material is formed thick, and the influence of the iron-nickel alloy layer is liable to appear in the mechanical properties of the surface treated steel foil for a current collector.

Here, "a diffraction intensity at a diffraction angle $2\Theta = 91.23° \pm 0.11°$ is obtained" is defined as "the maximum value of diffraction intensity at a diffraction angle $2\Theta = 91.23° \pm 0.11°$ is not less than 1.5 times the average of the diffraction intensity at a diffraction angle $2\Theta = 86° \pm 0.5°$." The diffraction intensity at a diffraction angle $2\Theta = 86° \pm 0.5°$ is not influenced by iron nor nickel in a sample obtained by forming nickel plating on a steel sheet. Hence, in the case where a diffraction intensity of not less than 1.5 times the average of diffraction intensity at the diffraction angle $2\Theta = 86° \pm 0.5°$ is obtained at a diffraction angle $2\Theta = 91.23° \pm 0.11°$ in the X-ray diffraction measurement, it can be understood that the crystal plane (311) in the crystal structure of $Fe_1Ni_1$ contained in the iron-nickel alloy layer 30 is present.

In the present embodiment, since the ratio of diffraction intensities expressed in the above formula (1) is not less than 0.015, the alloy phase of $Fe_1Ni_1$ is present in the iron-nickel alloy layer 30 in an amount sufficient for controlling hydrogen permeation, which is preferable. In addition, as a result, excellent hydrogen barrier properties can be obtained when the surface treated steel foil 10 for a current collector is used for a current collector of a bipolar battery.

Note that, here, "$I(Fe_1Ni_1(311))$" means the maximum value of diffraction intensity obtained at a diffraction angle of $2\Theta = 91.23° \pm 0.11°$ in the above-mentioned X-ray diffraction measurement. The diffraction intensity obtained at the above-mentioned diffraction angle indicates the (311) plane of $Fe_1Ni_1$ (this is based on 01-071-8322 of the data base of ICDD PDF-2 2014).

In addition, "$I(Fe(211))$" means the maximum value of diffraction intensity obtained at a diffraction angle of $2\Theta = 82.33° \pm 0.11°$ in the X-ray diffraction measurement. The diffraction intensity obtained at the above-mentioned diffraction angle indicates the (211) plane of iron (Fe) (this is based on 01-071-3763 of the data base of ICDD PDF-2 2014).

In the present application, the reason why the ratio of the diffraction intensity on the (311) plane of $Fe_1Ni_1$ to the diffraction intensity on the (211) plane of iron (Fe) is set as an index of hydrogen barrier properties of $Fe_1Ni_1$ is as follows.

In other words, under an environment in which the influences of a measuring device and measuring conditions are reduced by the diffraction intensity ratio to iron (Fe) as above, the present amounts of $Fe_1Ni_1$ can be compared between samples. In general, in the case of defining the diffraction intensity on a crystal plane A of a specified metallic material, for reducing the influences of the measuring device and conditions, use is made of a technique of dividing the diffraction intensity by the diffraction intensity on a crystal plane B selected for comparison or by the diffraction intensity of a specified plane of other metallic element securely contained, to make the diffraction intensity dimensionless, or a technique of dividing the diffraction intensity by the total of diffraction intensities to make the diffraction intensity dimensionless.

In the present invention, in view of the fact that the (211) plane of iron (Fe) is a plane exhibiting a highest diffraction intensity of iron (Fe) without being influenced by nickel, the diffraction intensity is divided by the diffraction intensity on this plane to make the diffraction intensity dimensionless, and to reduce the influences of the measuring device and conditions, thereby contriving definition of the present amount of $Fe_1Ni_1$. Note that, although a (200) plane of iron also exhibits a high diffraction intensity, it is excluded since its diffraction angle is near the diffraction angle of a (111) plane of nickel.

Note that, in the iron-nickel alloy layer 30 in the present embodiment, an alloy phase other than the alloy phase of the crystal structure of $Fe_1Ni_1$ may be contained, insofar as its content is in such a range as not to impede the present amount of $Fe_1Ni_1$. For example, alloy phases of crystal structures of $Fe_1Ni_3$, $Fe_3Ni_2$, and the like that are confirmed in an alloy phase diagram or are indexed by X-ray diffraction may be contained.

Also as a method for confirming the presence of the alloy phase of the crystal structure of $Fe_2Ni_3$, $Fe_3Ni_2$, or the like, the X-ray diffraction (XRD) measurement can be used as with the case of $Fe_1Ni_2$. For example, $Fe_2Ni_3$ can be confirmed by the diffraction intensity on the (311) plane at $2\Theta = 91.97° \pm 0.11°$. In addition, the presence of $Fe_3Ni_2$ can be confirmed by the presence or absence of the diffraction intensity on the (311) plane at $2\Theta = 90.48° \pm 0.11°$ (these are based respectively on 01-071-8323 and 03-065-5131 of the data base of ICDD PDF-2 2014).

In short, as with the case of $Fe_1Ni_2$, when the maximum values of diffraction intensities at respective diffraction angles of $2\Theta = 91.97° \pm 0.11°$ and $2\Theta = 90.48° \pm 0.11°$ are in a diffraction angle range in which a diffraction intensity is clearly not obtained, for example, numerical values not less than 1.5 times the average of measurements at $2\Theta = 86° \pm 0.5°$ that is not influenced by iron nor nickel in a sample obtained by forming nickel plating on a steel sheet, the presence of $Fe_2Ni_3$ and $Fe_3Ni_2$ can be confirmed.

Note that the above-mentioned X-ray diffraction (XRD) measurement is conducted by an X-ray diffraction method using CuK$\alpha$ as a ray source, and the diffraction intensity is expressed in cps.

As described above, in the iron-nickel alloy layer 30 in the present embodiment, in the case where at least one of alloy phases of the crystal structures of $Fe_1Ni_3$ and $Fe_3Ni_2$ is present in addition to the alloy phase of the crystal structure of $Fe_1Ni_2$, relative ratios of X-ray diffraction intensities obtained by dividing respective diffraction intensities by the total of the diffraction intensities of the alloy phases contained can be used as indices of content ratios of the respective alloy phases. Particularly for obtaining stable hydrogen barrier properties, the ratio of $Fe_1Ni_1$ on the (311) plane is preferably not less than 0.2.

In other words, it is preferable that the following formula (2) be satisfied.

From a viewpoint of further enhancing the hydrogen barrier properties, the ratio mentioned below is more preferably not less than 0.25. In addition, it is preferable that the ratio be less than 0.8. When the ratio mentioned below is not less than 0.8, diffusion of iron may proceed excessively, and corrosion resistance may be concerned.

$$I(Fe_1Ni_1(311))/(I(Fe_1Ni_1(311)) + I(Fe_1Ni_3)(311)) + I(Fe_3Ni_2(311))) \geq 0.2 \cdots (2)$$

Further, it is preferable that the ratio of $Fe_1Ni_3$ on the (311) plane be not more than 0.5.

In other words, it is preferable that the following formula (3) be satisfied. Note that, with respect to the ratio mentioned below, from the viewpoint of further enhancing the hydrogen barrier properties, it is preferable that a lower limit for the formula (3) be not less than 0.02, more preferably not less than 0.08. In the case where the ratio mentioned below is less than 0.02, formation of the iron-nickel alloy layer may be insufficient, and sufficient hydrogen barrier properties may not be exhibited.

$$I(Fe_1Ni_3(311))/(I(Fe_1Ni_1(311)) + I(Fe_1Ni_3(311)) + I(Fe_3Ni_2(311))) \leq 0.5 \cdots (3)$$

The reason why attention is paid to $Fe_1Ni_3$ lies in that $Fe_1Ni_3$ as an alloy phase in the iron-nickel alloy is described also in a general thermal equilibrium phase diagram and is an alloy phase that is considered to be easily detected, and meanwhile, $Fe_1Ni_3$ is a structure most close to nickel among the alloy phases in the iron-nickel alloy. In the case where such $Fe_1Ni_3$ is contained in a large amount, it is considered that an iron-nickel alloy layer formed under the condition where alloying hardly proceeds is present, formation of the $Fe_1Ni_1$ alloy phase considered to be higher in hydrogen barrier properties may be impeded, and, because $Fe_1Ni_3$ is a configuration close to nickel, the hydrogen barrier properties may be lowered as compared to the case where the $Fe_1Ni_1$ alloy phase is formed, so that it is preferable that the above-mentioned formula (3) be satisfied.

In the surface treated steel foil for a current collector having the iron-nickel alloy layer 30 of the present embodiment, a crystal orientation index of X-ray diffraction of a (220) plane of $Fe_1Ni_1$ is preferably less than 2.0, from the viewpoint of hydrogen barrier properties. With the crystal orientation index of the iron-nickel alloy layer set in this range, the crystal state of the iron-nickel alloy obtained by a heat treatment can be held to be favorable, and more favorable hydrogen barrier properties can be obtained.

The crystal orientation index $Ico\_Fe_1Ni_1(220)$ of X-ray diffraction of the (220) plane of $Fe_1Ni_1$ was defined and calculated by the following formula. The suffix co means crystal orientation.

$$Ico\_Fe_1Ni_1(220) =$$

$$[I\_Fe_1Ni_1(220)/[I\_Fe_1Ni_1(111) + I\_Fe_1Ni_1(200) +$$

$$I\_Fe_1Ni_1(220) + I\_Fe_1Ni_1(311) + I\_Fe_1Ni_1(222)]]$$

$$/[I_S\_Fe_1Ni_1(220)/[I_S\_Fe_1Ni_1(111) + I_S\_Fe_1Ni_1(200) +$$

$$I_S\_Fe_1Ni_1(220) + I_S\_Fe_1Ni_1(311) + I_S\_Fe_1Ni_1(222)]]$$

Here, the diffraction intensities of the respective crystal planes of $Fe_1Ni_1$ measured by X-ray diffraction are expressed as follows.

$I\_Fe_1Ni_1(111)$: the diffraction intensity on the $Fe_1Ni_1(111)$ crystal plane measured by X-ray diffraction
$I\_Fe_1Ni_1(200)$: the diffraction intensity on the $Fe_1Ni_1(200)$ crystal plane measured by X-ray diffraction
$I\_Fe_1Ni_1(220)$: the diffraction intensity on the $Fe_1Ni_1(220)$ crystal plane measured by X-ray diffraction
$I\_Fe_1Ni_1(311)$: the diffraction intensity on the $Fe_1Ni_1(311)$ crystal plane measured by X-ray diffraction
$I\_Fe_1Ni_1(222)$: the diffraction intensity on the $Fe_1Ni_1(222)$ crystal plane measured by X-ray diffraction

The diffraction intensity here is the maximum value of the diffraction intensity (cps) measured in the range of each diffraction angle ($2\theta$) $\pm$ 0.11° described in Joint Committee on Powder Diffraction Standards (JCPDS, PDF card No. 01-071-8322).

Specifically, the diffraction intensity on the (111) plane is the maximum value in the range of 43.83° $\pm$ 0.11°, that on the (200) plane is the maximum value in the range of 51.05° $\pm$ 0.11°, that on the (220) plane is the maximum value in the range of 75.10° $\pm$ 0.11°, that on the (311) plane is the maximum value in the range of 91.23° $\pm$ 0.11°, and that on the (222) plane is the maximum value in the range of 96.56° $\pm$ 0.11°.

Note that the reason why attention is paid to the (311) plane in the formulas (1) to (3) lies in that the (311) plane is a crystal plane on which identification of each of Ni, $Fe_1Ni_1$, $Fe_1Ni_3$, and $Fe_3Ni_2$ is possible and on which intensities sufficient for confirmation of the presence or absence of peaks can be obtained. In other words, the nickel and the alloy phases all assume an fcc structure, and lattice constants are close to one another, so that the positions of diffraction peaks derived from plane spacing of each metal structure (inclusive of alloys) in the $2\theta/\theta$ measurement of X-ray diffraction are in the vicinity, and particularly, on a crystal plane on which peaks appear on a low angle side, the peaks are overlapping and it is difficult to identify them. On the other hand, on a crystal plane on which peaks appear on a high angle side, the overlapping is dissolved and identification of the peaks is easy, but sufficient intensities are obtained with difficulty, and it may be difficult to determine whether an alloy phase is absent or whether a specific crystal plane is absent. In view of this, the present inventors have made extensive and intensive investigations of a crystal plane on which the plane spacings are narrow, peaks appear on a comparatively high angle side, and sufficient intensities are exhibited; as a result, they have found out that the (311) plane satisfies these conditions and exhibits correlation with hydrogen barrier properties also in the above-mentioned formula (1).

Here, evaluation of hydrogen barrier properties will be described. In the case where hydrogen permeates and moves in the surface treated steel foil 10 for the current collector as described above, hydrogen atoms reaching the hydrogen detection side from the hydrogen invasion side are oxidized, to become hydrogen ions. The value of an oxidation current in this instance varies according to the amount of hydrogen reaching a hydrogen detection surface, and hence, by the current value detected, the hydrogen barrier properties of the surface treated steel foil 10 for the current collector can be digitized and evaluated (Tooru Tsuru, Tokyo Institute Of Technology, Zairyo-to-Kankyo (Materials and Environments), 63, 3-9(2014), Electrochemical Measurements for Hydrogen Entry and Permeation of Steel).

As a result of the above-mentioned expectation, the present inventors made measurement and evaluation, and in the present embodiment, have come to a conclusion that, in order to restrain the occurrence of the above-mentioned voltage drop (self-discharge) in a more stable manner, it is preferable that the surface treated steel foil 10 for the current collector of the present embodiment have a hydrogen permeation current density, which is obtained from the oxidation current measured electrochemically, of not more than 15 $\mu$A/cm$^2$. Note that the measuring conditions for the hydrogen permeation current density in the present embodiment were a liquid electrolyte at 65°C, a reference electrode of silver/silver chloride (Ag/AgCl), a potential on the hydrogen generation side of -1.5 V, and a potential on the hydrogen detection side of +0.4 V. Note that all the numerical values of potential used in the measuring method for the hydrogen permeation current density in the present embodiment are based on the reference electrode of Ag/AgCl.

As a specific example of the measuring method for the hydrogen permeation current density in the present embodiment, a current value (current density) is detected by use of a measuring device configured as depicted in FIG. 2(a), so that the hydrogen barrier properties of the surface treated steel foil 10 for the current collector can be digitized and evaluated. The measuring device depicted in FIG. 2(a) will be described below. In the following description, the hydrogen invasion side is also referred to as the hydrogen generation side, and is the side on which a hydrogen occluding alloy is disposed, namely, the side of the first surface 10a of the surface treated steel foil 10 for the current collector. In addition, the hydrogen detection side is the side opposite to the hydrogen invasion side, and is the side of a positive pole of a bipolar electrode structure, namely, the side of the second surface 10b of the surface treated steel foil 10 for the current collector.

Two cells, i.e., a cell X for hydrogen generation and a cell Y for detection of permeated hydrogen, are prepared, and a test piece (sample) of the surface treated steel foil 10 for the current collector is disposed between the two measuring cells. An alkaline aqueous solution (alkaline liquid electrolyte) is accommodated in each of the measuring cells, and reference electrodes (RE1 and RE2) and counter electrodes (CE1 and CE2) are immersed in the solution. An Ag/AgCl electrode in a saturated KCl solution is used as the reference electrode, and platinum (Pt) is used as the counter electrode. In addition, the alkaline liquid electrolyte has a composition including KOH, NaOH, and LiOH, and its temperature is 65°C. Besides, as depicted in FIG. 2(b), the measured diameter of the surface treated steel foil 10 for the current collector is $\varphi$20 mm (measured area: 3.14 cm$^2$). Potential control and current measurement on the hydrogen invasion side and the hydrogen detection side are conducted by use of a potentiostat as depicted in FIG. 2(a). As the potentiostat, for example, a "multi-electrochemical measurement system HZ-Pro" made by HOKUTO DENKO CORPORATION can be used. Note that connection of the sample of the surface treated steel foil 10 for the current collector to be evaluated and electrodes can be conducted as depicted in FIG. 2(a).

The sample is polarized to a cathode (base potential) on the hydrogen generation side, hydrogen is generated on the surface of the sample, and hydrogen is caused to invade. The potential is applied stepwise at - 0.7 V, -1.1 V, and -1.5 V, each potential being applied for 15 minutes. The reason why the potential is applied thus stepwise is to suppress an influence at the time of variation in the potential, and to obtain a stable plot. Note that measurement plots are obtained at intervals of five seconds.

Note that, in general, in a nickel-hydrogen battery using a nickel hydroxide compound as a positive electrode and a hydrogen occluding alloy as a negative electrode, an operating potential of the negative electrode in charge-discharge reactions of the battery is around -1.1 V. In the above-mentioned measuring method applicable to the present embodiment, as a technique by which it is possible to confirm the effect of the hydrogen barrier properties without using a hydrogen occluding alloy, measuring conditions for more conspicuous generation of hydrogen were investigated. Further, it was determined to use, for calculation of the hydrogen permeation current density I ($\mu$A/cm$^2$), variation in oxidation current (hereinafter referred to also as the oxidation current variation) at the time when the applied potential on the hydrogen generation side is -1.5 V.

In the case where hydrogen atoms permeate from the hydrogen generation side to the hydrogen detection side, oxidation of the permeated hydrogen atoms on the hydrogen detection side results in generation of an oxidation current which is measured by the potentiostat on the hydrogen detection side. Hence, by this oxidation current variation, the hydrogen permeability of the surface treated steel foil 10 for the current collector can be digitized and evaluated. Note that, on the hydrogen detection side, the potential applied is maintained in order to accelerate the oxidation of hydrogen atoms into hydrogen ions and to make clear the peak of the oxidation current.

In a nickel-hydrogen battery using a nickel hydroxide compound as the positive electrode and a hydrogen occluding alloy as the negative electrode, a positive electrode operating potential in charge-discharge reactions of the battery is generally around +0.4 V. In view of this, in the present measuring method, a potential of +0.4 V was applied on the detection side and was maintained during measurement. Note that, before applying the potential on the hydrogen generation side, the hydrogen detection side was maintained at the above-mentioned potential for 60 minutes for stabilization of current value. In addition, after the application of the potential on the hydrogen generation side is finished, that is, after the application of -1.5 V for 15 minutes is finished and the application on the hydrogen generation side becomes zero, application of +0.4 V on the hydrogen detection side is maintained for five minutes, for calculation of background. The measurement plots are at intervals of five seconds.

In other words, as a pre-step of evaluation by the measurement, first, an operation is started by applying +0.4 V on the hydrogen detection side, and next, the application is continued for 60 minutes to stabilize the current value, after which the application on the hydrogen generation side is started as practical evaluation (15 minutes at each potential, and a total of 45 minutes).

By the oxidation current variation on the hydrogen detection side obtained by the above-mentioned technique, the hydrogen permeation current density I ($\mu$A/cm$^2$) can be calculated. A plot of the thus obtained oxidation current and a digitized image of the hydrogen permeation current density I ($\mu$A/cm$^2$) are depicted in FIGS. 2 (c) to 2 (e) .

FIG. 2(c) is a diagram depicting the current value measurement of a whole part inclusive of a pre-step and a post-step for evaluation. In addition, FIG. 2(d) is a diagram depicting variation in the current value for practical evaluation and is a diagram obtained by enlarging a part substantially ranging from 5,300 to 6,500 seconds in FIG. 2(c). FIG. 2(e) is a diagram for comparison of the present invention and is a diagram depicting variation in the current value in the case where current value measurement similar to that of FIG 2(c) is conducted by use of a surface treated steel foil in which a nickel plating layer having a thickness of 1.0 um is provided on a steel foil having a thickness of 50 um and no heat treatment is conducted, that is, which is in a state not having an iron-nickel alloy layer. According to FIG. 2(e), it can be confirmed that, in the case of the surface treated steel foil not having the iron-nickel alloy layer constituting a characteristic feature of the present invention, the detection side current value during application of -1.5 V for 15 minutes is clearly high as compared to that in the case of the metallic foil depicted in FIG. 2(c).

Note that, in the present embodiment, the hydrogen permeation current density I ($\mu$A/cm$^2$) can be calculated by the following formula, based on oxidation current variation at the time when the potential applied on the hydrogen generation side is -1.5 V as depicted in FIG. 2(d).

$$\text{Hydrogen permeation current density I } (\mu\text{A/cm}^2) =$$

$$((\text{Average value of oxidation current from Ib to Ic})/\text{S}) -$$

$$((\text{Average of Ia and Id})/\text{S})$$

where Ia ($\mu$A) is oxidation current at five seconds before application of -1.5 V, Ib ($\mu$A) is oxidation current at 155 seconds after the start of application of -1.5 V, Ic ($\mu$A) is oxidation current at the time when application of -1.5 V is finished, Id ($\mu$A) is oxidation current at 155 seconds after the finish of application of -1.5 V, and S (cm$^2$) is the measurement area (evaluation area) of the measurement test piece.

It can be determined that, when the hydrogen permeation current density I ($\mu$A/cm$^2$) calculated by the above formula is small, permeation of hydrogen is restrained, in other words, hydrogen barrier properties are high, whereas, when the hydrogen permeation current density I ($\mu$A/cm$^2$) is large, permeation of hydrogen occurs easily.

In the present embodiment, it has been concluded that, in the case where the hydrogen permeation current density electrochemically measured as described above is not more than 15 $\mu$A/cm$^2$, such a hydrogen permeation current density is suitable for a bipolar electrode in terms of more stable hydrogen barrier properties inside the surface treated steel foil 10 for the current collector. It is to be noted that the hydrogen permeation current density is an increment of oxidation current measured on the hydrogen detection side (anode side) when a potential of -1.5 V is applied on the hydrogen generation side (cathode side) under a condition where the potential on the hydrogen detection side is +0.4 V (vs Ag/AgCl) in a liquid electrolyte at 65°C. Note that, in the case where an increment of the oxidation current is not detected, the hydrogen permeation current density is 0 (zero).

Note that it is known that, in general, different metallic materials have different diffusion coefficients of hydrogen according to the respective kinds thereof, and in order to restrain defects and a hydrogen embrittlement phenomenon due to hydrogen in metal according to the use of the metallic material, a metallic material that restrains invasion of hydrogen may be demanded. Examples of such a case include an example in which a high alloy steel is used for restraining delayed fracture of a high strength bolt, and an example in which a titanium welded member is used for restraining cracking of a pressure reaction vessel.

However, such materials and uses are not based on the assumption of hydrogen invasion under an environment where the hydrogen amount is positively enhanced, such as placing a hydrogen occluding alloy on a surface. In addition, a problem in these technologies is an influence hydrogen remaining in the metal has on mechanical properties of the metal itself, and there is generated no problem regarding the influence of permeation of hydrogen through a metallic material on the other surface side.

In addition, as hydrogen permeation in a battery material, it is known that, for example, hydrogen impermeability is demanded as a gas impermeability in a separator of a fuel cell. It is to be noted, however, that, in fuel cells, it has been considered that hydrogen permeation is a problem mainly in the case of a carbon separator, whereas hydrogen permeation is not present and is not a problem in the cases where a stainless steel or aluminum separator is used. Besides, since corrosion resistance in a sulfuric acid atmosphere is indispensable to the separator of a fuel cell and application of a steel sheet is difficult, there has been found no problem based on an assumption that a steel sheet is applied. On the other hand, in a current collector in a bipolar electrode structure in which one surface of the current collector is made of a negative electrode active material layer and the other surface is made of a positive electrode active material layer, it has been verified that a hydrogen permeation phenomenon is generated easily as compared to the fuel cell and it may influence battery performance. This problem is considered to have been verified due to differences in battery structure, object part, internal environment, and the like from the fuel cell.

From a viewpoint of restraining the above-mentioned hydrogen permeation, the thickness of the iron-nickel alloy layer 30 contained in the surface treated steel foil 10 for the current collector of the present embodiment is preferably not less than 0.6 um on at least one surface side. While an upper limit is not particularly limited to any value, if the thickness of the nickel plating is large, the calorific value required for forming a sufficient $Fe_1Ni_1$ phase is increased and it is difficult to form the phase, so that the thickness is preferably not more than 7.0 um per one surface. Particularly, a continuous steel strip as a base material is subjected to a surface treatment, and the iron-nickel in the present embodiment has a thickness of preferably not more than 12 $\mu$m, more preferably not more than 7 $\mu$m.

Note that a method of calculating the thickness of the iron-nickel alloy layer 30 in the present embodiment will be described. As the calculating method for the thickness of the iron-nickel alloy layer 30 in the present embodiment, by an analysis of SEM-energy dispersive X-ray spectroscopy (EDX) of a section of the surface treated steel foil for the current collector, a quantitative analysis of Ni and Fe in a depth of down to at least 10 um in the thickness direction from the front surface side can be performed. In the case where the alloy layer thickness exceeds 10 um, the quantitative analysis is conducted down to a required depth.

An example of the method for obtaining the thickness of the iron-nickel alloy layer 30 from a graph obtained by SEM-EDX will be described. In a graph in FIG. 3, the axis of abscissas represents the distance ($\mu$m) in the depth direction from the front surface side, and the axis of ordinates represents the X-ray intensity of Ni and Fe. It is indicated in the graph in FIG. 3 that, in a shallow part toward the thickness direction, nickel content is large and iron content is small. On the other hand, the iron content gradually increases in going forward in the thickness direction.

At parts in front of and behind an intersection of the curve of nickel and the curve of iron, the distance between 1/10 times the maximum value of nickel and 1/10 times the maximum value of iron is deemed as the thickness of the iron-nickel alloy layer 30, and the thickness can be read from the graph.

Note that, also in the cases where a metallic layer 40 or a roughened nickel layer 50 which will be described later is formed on the iron-nickel alloy layer 30, the thickness of the iron-nickel alloy layer 30 can be obtained by the above-described method. Reading 1/10 times the maximum value is for reducing the influence of the background.

In the surface treated steel foil 10 for the current collector in the present embodiment, it is preferable, in terms of hydrogen barrier properties, liquid electrolyte resistance, and the like suitable for a bipolar electrode, that the deposition amount of nickel in the iron-nickel alloy layer 30 be 0.8 to 53.4 $g/m^2$, more preferably 0.8 to 26.7 $g/m^2$. Note that the deposition amount of nickel in the iron-nickel alloy layer 30 can be measured by X-ray fluorescence analysis (XRF) or the like.

In the present embodiment, the iron-nickel alloy layer 30 may be a layer formed without addition of a brightening agent, or may be a layer formed by addition of a brightening agent (inclusive of a brightening agent for semi-luster).

Note that "lustrous" or "lusterless" in the above description depends on evaluation of visual appearance and it is difficult to rigorously classify them in terms of numerical values. Further, the degree of luster can vary according to other parameters such as bath temperature described later. Hence, the "lustrous" or the "lusterless" used in the present embodiment is a definition in the case of paying attention to the presence or absence of a brightening agent.

Next, the thickness of the whole part of the surface treated steel foil 10 for the current collector in the present embodiment will be described. Note that, as the "thickness of the surface treated steel foil 10 for the current collector" in the present embodiment, thickness measurement by observation of a section under a SEM or thickness measurement by a micrometer is also applicable.

The thickness of the whole part of the surface treated steel foil 10 for the current collector in the present embodiment, in the case where the steel foil does not have the roughened nickel layer 50 which will be described later, is preferably in the range of 10 to 300 um. In addition, in terms of strength, desired battery capacity, and the like, the thickness is more preferably 10 to 200 $\mu$m, and further preferably 25 to 100 um.

On the other hand, the thickness of the whole part of the surface treated steel foil 10 for the current collector in the present embodiment, in the case where the steel foil has the roughened nickel layer 50 which will be described later at the outermost surface, is preferably in the range of 20 to 310 um. Besides, in terms of strength, desired battery capacity, and the like, the thickness is more preferably 20 to 210 $\mu$m, and further preferably 30 to 110 um.

In the case where the thickness exceeds the upper limit of the above-mentioned thickness range, the thickness is unfavorable in terms of a volume and weight energy density of the battery to be manufactured, and is unfavorable particularly in the case where thinning of the battery is intended. On the other hand, in the case where the thickness is less than the lower limit of the above-mentioned thickness range, not only does it become difficult to realize a strength sufficient against the influence of charging and discharging of the battery, but there is also a high possibility of generation of breakage, rupture, wrinkling, or the like during manufacture, handling, and the like of the battery.

Note that, for "the thickness of the surface treated steel foil 10 for the current collector" in the present embodiment, for example, thickness measurement by use of a micrometer may be applied.

The surface treated steel foil 10 for the current collector in the present embodiment may further have the metallic layer 40 formed on the above-mentioned iron-nickel alloy layer 30, as depicted in FIG. 4. Examples of the metallic material constituting the metallic layer 40 include nickel, chromium, titanium, copper, cobalt, and alloys containing these metals. Of these kinds of metal and alloys, nickel and nickel alloys are particularly preferable for the reason of being excellent in liquid electrolyte resistance and strength. Note that a nickel layer may be formed on the iron-nickel alloy layer by preventing iron from diffusing to the surface in forming the iron-nickel alloy layer 30 by performing a heat treatment after nickel electroplating. In addition, nickel plating may be carried out further on such a metallic layer 40.

In other words, in the surface treated steel foil 10 for the current collector in the present embodiment, effects of formation of the metallic layer 40 on the iron-nickel alloy layer 30 are as follows. By forming the metallic layer 40 in addition to the iron-nickel alloy layer 30, conductivity, corrosion resistance, strength, and the like of the surface treated steel foil 10 for the current collector as a whole can be adjusted, and the surface treated steel foil for the current collector can be manufactured as a current collector material having desired properties.

In the case where the metallic layer 40 is a nickel layer in the surface treated steel foil 10 for the current collector in the present embodiment, it is preferable, in terms of hydrogen barrier properties suitable for a bipolar electrode, liquid electrolyte resistance, and the like, that the total of the nickel deposition amounts in the iron-nickel alloy layer 30 and the metallic layer 40 (nickel layer) be 2.0 to 53.4 $g/m^2$, more preferably 2.0 to 26.7 $g/m^2$. Note that the nickel deposition amounts in the iron-nickel alloy layer 30 and the metallic layer 40 can be measured by X-ray fluorescence analysis (XRF) or the like.

Note that the thickness of the metallic layer 40 is preferably 0.1 to 4.0 um, more preferably 0.1 to 3.5 um, further preferably 0.1 to 3.0 um, and particularly preferably 0.2 to 2.5 um. In addition, as for the thickness ratio of the iron-nickel alloy layer 30 and the metallic layer 40 in the surface treated steel foil 10 for the current collector, particularly in the case where the metallic layer 40 is a nickel layer, it is preferable, in terms of enhancing the liquid electrolyte resistance while more enhancing the hydrogen barrier properties, that the iron-nickel alloy layer 30: the metallic layer 40 = 3:10 to 60:1, and more preferably the iron-nickel alloy layer 30: the metallic layer 40 = 3:4 to 35:1.

As for a measuring method for the thickness of the metallic layer 40, also, as in the case of the iron-nickel alloy layer 30, thickness measurement by SEM-EDX of a section of the surface treated steel foil for the current collector is applicable.

In the surface treated steel foil 10 for the current collector in the present embodiment, the roughened nickel layer 50 may be formed at the outermost surface as depicted in FIG. 5. Note that the roughened nickel layer may be formed on the above-mentioned metallic layer 40 as depicted in FIG. 6.

The roughened nickel layer 50 may be formed on the side of the second surface 10b of the surface treated steel foil 10 for the current collector as depicted in FIG. 5(a), may be formed on the side of the first surface 10a as depicted in FIG. 5(b), or may be formed on both sides. Note that, since the roughened nickel layer is described, for example, in the present inventors' application (WO2021/020338 and the like), the details thereof are omitted here, but it is preferable, in terms of enhancing adhesion with an active material, that a three-dimensional surface property parameter Sa of the roughened nickel layer be 0.2 to 1.3 um, more preferably 0.36 to 1.2 um.

Note that, in forming the roughened nickel layer 50, from a viewpoint of adhesion between the roughened nickel layer 50 and an underlying layer, a ground nickel layer may be formed prior to roughened nickel plating, further the roughened nickel plating may be performed, and thereafter coating nickel plating may be conducted to form the roughened nickel layer. In other words, nickel plating formed as the metallic layer 40 on the iron-nickel alloy layer may be regarded as the ground nickel layer, and the roughened nickel layer 50 may be formed thereon. In addition, a metallic layer 40 obtained by a heat treatment in forming the iron-nickel alloy layer so performed as to leave a nickel layer in which iron is little diffused on the iron-nickel alloy layer and further performing nickel plating thereon may be regarded as the ground nickel layer, and the roughened nickel layer 50 may be formed thereon. Besides, the description of the above-mentioned metallic layer 40 or the "roughened nickel layer 50" herein may include a coating nickel layer. Note that the details of the ground nickel layer and the roughened nickel layer will be described later.

In the case where the roughened nickel layer 50 is formed, the total of the nickel deposition amounts in the iron-nickel alloy layer 30 and the roughened nickel layer 50 is preferably 9 to 106 $g/m^2$, more preferably 15 to 70 $g/m^2$, and further preferably 27 to 60 $g/m^2$.

In the case where the roughened nickel layer 50 is formed and where the roughened nickel layer 50 is formed on the metallic layer 40 composed of nickel, the total of the nickel deposition amounts in the iron-nickel alloy layer 30, the metallic layer 40, and the roughened nickel layer 50 is preferably 9 to 106 $g/m^2$, more preferably 15 to 70 $g/m^2$, and further preferably 27 to 60 $g/m^2$.

Note that, as the method for measuring the nickel deposition amount in the roughened nickel layer 50, the methods described in WO2020/017655, WO2021/020338, and the like can appropriately be adopted. In other words, the nickel deposition amount can be determined by measuring the total nickel amount in the surface treated steel foil 10 for the current collector by use of an X-ray fluorescence (XRF) device.

«Manufacturing method for surface treated steel foil for current collector»

A manufacturing method for the surface treated steel foil 10 for the current collector in the present embodiment will be described. The manufacturing method for the surface treated steel foil 10 for the current collector in the present embodiment has a step of forming an iron-nickel alloy layer 30 that restrains permeation or diffusion of hydrogen in the surface treated steel foil for the current collector, on at least one surface side of the side of a first surface 10a where a hydrogen occluding alloy is disposed and the side of a second surface 10b on the side opposite to the first surface 10a.

In the present embodiment, after a nickel plating layer is formed by electroplating on at least one surface of a steel foil as a metallic base material 20, a heat treatment is carried out to form an iron-nickel alloy layer 30 through thermal diffusion.

In addition, the iron-nickel alloy layer 30 may be formed by electroplating using a plating bath containing iron ions and nickel ions on at least one surface of the steel foil as the metallic base material 20.

In other words, as steps for forming the iron-nickel alloy layer 30, there may be mentioned (i-1) a step of forming a nickel plating layer on at least one surface of a steel foil, and (i-2) a step of forming the iron-nickel alloy layer 30 through thermal diffusion by performing a heat treatment of the nickel plating layer formed on the steel foil.

Alternatively, (ii) a step of forming the iron-nickel alloy layer 30 by using a plating bath containing iron ions and nickel ions on at least one surface of the steel foil may also be mentioned.

In the manufacturing method in the present embodiment, as the plating conditions and the like at the time of forming the nickel plating layer and forming the iron-nickel alloy plating layer by electroplating, known conditions are applicable. An example of the plating conditions will be indicated below.

Note that the deposition amount of the nickel plating can be converted into the thickness of the nickel plating by dividing it by a specific gravity of nickel, 8.9.

[Nickel plating bath (Watts bath) and example of plating conditions]

Bath composition:

Nickel sulfate hexahydrate: 200 to 300 g/L
Nickel chloride hexahydrate: 20 to 60 g/L
Boric acid: 10 to 50 g/L
Bath temperature: 40°C to 70°C
pH: 3.0 to 5.0
Stirring: air stirring or jet stirring
Current density: 5 to 30 A/dm$^2$

Note that, in regard of the bath composition, not only the Watts bath, but also a known nickel sulfamate bath or a citric acid bath may be used. Further, additives such as a known brightening agent may be added to the plating bath, to perform bright nickel plating or semi-bright nickel plating.

[Iron-nickel alloy plating bath and example of plating conditions]

Bath composition

Nickel sulfate hexahydrate: 150 to 250 g/L
Iron sulfate heptahydrate: 5 to 100 g/L
Nickel chloride hexahydrate: 20 to 50 g/L
Boric acid: 20 to 50 g/L
Sodium citrate (or trisodium citrate): 1 to 15 g/L
Sodium saccharin: 1 to 10 g/L

·Temperature: 25°C to 70°C
·pH: 2 to 4

·Stirring: air stirring or jet stirring
·Current density: 5 to 40 A/dm$^2$

Note that, in regard of the above-mentioned bath temperature, in the case where the bath temperature is less than 25°C, electrodeposition efficiency is lowered, or precipitation occurs with difficulty, so that it is difficult to form the desired alloy layer, which is unfavorable. In addition, it may be impossible to precipitate the layer, which is unfavorable. On the other hand, in the case where the bath temperature exceeds 70°C, also, the plating film becomes hard, or the possibility of generation of defects such as cracks becomes high, which is unfavorable. Besides, it becomes difficult to control the composition of iron (Fe) and nickel (Ni), which is unfavorable.

In the case where pH is less than 2, precipitation of nickel (Ni) occurs with difficulty, and it becomes impossible to control the desired composition of iron (Fe) and nickel (Ni), which is unfavorable. In addition, plating precipitation efficiency is lowered, which is unfavorable. On the other hand, if pH exceeds 4, precipitation of iron (Fe) occurs with difficulty, and it becomes impossible to control the desired composition of iron (Fe) and nickel (Ni), which is unfavorable. In addition, sludge may be engulfed into the obtained layer, which is unfavorable.

In regard of the current density, in the case where the current density is less than 5 A/dm$^2$, stress on a coating film becomes too high, so that defects such as cracks in the plating film are liable to be generated, which is unfavorable. In addition, production efficiency may be lowered, which is unfavorable. In the case where the current density exceeds 40 A/dm$^2$, plating burning may be generated, which is unfavorable.

Besides, an anti-pitting agent may be added in an appropriate amount.

In the manufacturing method in the present embodiment, the deposition amount of nickel in the nickel plating layer or the iron-nickel alloy plating layer formed on the steel foil is preferably 0.8 to 53.4 g/m$^2$ per one surface. In the case where the deposition amount exceeds 53.4 g/m$^2$, operability of electroplating is lowered, so that cost is largely increased. On the other hand, in the case where the deposition amount is less than 0.8 g/m$^2$, it may be impossible to obtain sufficient liquid electrolyte resistance, which is unfavorable. From viewpoints of cost and liquid electrolyte resistance, it is more preferable that the nickel deposition amount on the steel foil after alloy plating or after the heat treatment which will be described later be 0.8 to 26.7 g/m$^2$ per one surface, and the total deposition amount on both surfaces is further preferably 1.5 to 53.5 g/m$^2$.

Next, conditions for the heat treatment in the above-mentioned (i-2) step will be described. As the conditions for the heat treatment step in the present embodiment, the following conditions may be mentioned. Note that the heat treatment in the present embodiment may be continuous annealing or may be batch annealing (box annealing).

As an example of temperature and time in the case of the continuous annealing treatment, the annealing is preferably carried out at a temperature of 700°C to 950°C for a soaking time of 20 to 150 seconds. In the case of a lower temperature or a shorter time, a sufficient iron-nickel alloy layer 30 may not be obtained successfully, which is unfavorable. On the other hand, in the case of a higher temperature or a longer time than the above-mentioned heat treatment ranges, variations in mechanical properties of the steel foil as the base material or the like are large, and strength is conspicuously lowered, which is unfavorable, or it is unfavorable in terms of cost.

As an example of temperature and time in the case of the batch annealing (box annealing), the annealing is preferably carried out at a temperature of 450°C to 690°C for a soaking time of 1.5 to 20 hours, and a total time of heating, soaking, and cooling of 4 to 80 hours. More preferably, the annealing is carried out at a temperature of 500°C to 650°C for a soaking time of 4 to 20 hours, and a total time of 6 to 80 hours. In the case of a lower temperature or a shorter time than this, it may be impossible to obtain a sufficient iron-nickel alloy layer 30, which is unfavorable. On the other hand, in the case of a higher temperature or a longer time than the above-mentioned heat treatment ranges, variations in the mechanical properties of the steel foil as the base material or the like are large, and strength might be conspicuously lowered, which is unfavorable, or such a higher temperature or a longer time is unfavorable in terms of cost.

Note that, in the present embodiment, after the above-mentioned heat treatment step, temper rolling or rolling with a low draft of 0% to 25% may be performed insofar as in such a scope as to satisfy the formula (1).

Note that, in the manufacturing method for the surface treated steel foil 10 for the current collector in the present embodiment, in the case of forming a nickel layer as the metallic layer further on the iron-nickel alloy layer 30, the nickel layer can be formed by a known nickel bath such as the above-mentioned Watts bath, a nickel sulfamate bath, or a citric acid bath. In this case, it is preferable to carry out a known strike nickel plating treatment immediately before forming the nickel layer.

Note that it is preferable, in terms of adhesion with the roughened nickel layer which will be described later, that a heat treatment not be conducted after the formation of this metallic layer.

In addition, in the manufacturing method for the surface treated steel foil 10 for the current collector in the present embodiment, the roughened nickel layer 50 can be formed at the outermost surface. Note that a plating bath for forming the roughened nickel layer has a chloride ion concentration of preferably 3 to 90 g/L, more preferably 3 to 75 g/L, and further preferably 3 to 50 g/L, a ratio between nickel ions and ammonium ions in terms of weight ratio of "nickel ions/ammonium ions" of preferably 0.05 to 0.75, more preferably 0.05 to 0.60, further preferably 0.05 to 0.50, and still further preferably 0.05 to 0.30, and a bath conductivity at 50°C of preferably 5.00 to 30.00 S/m, more preferably 5.00 to 20.00 S/m, and further preferably 7.00 to 20.00 S/m. Note that, in the case where the chloride ion concentration is not less than 10 g/L, a favorable roughened plating state can easily be realized even if the deposition amount in the roughened nickel plating is somewhat small. The method for adjusting the chloride ion concentration, the ratio between nickel ions and ammonium ions, and bath conductivity of the plating bath within the above-mentioned ranges is not particularly limited to any method; for example, there may be mentioned a method in which the plating bath contains nickel sulfate hexahydrate, nickel chloride hexahydrate, and ammonium sulfate, and the blending amounts of these compounds are appropriately adjusted.

An example of plating conditions is as follows.

«Example of roughened nickel plating conditions»

Bath composition: Nickel sulfate hexahydrate 10 to 100 g/L, Nickel chloride hexahydrate 1 to 90 g/L, ammonium sulfate 10 to 130 g/L

pH 4.0 to 8.0
Bath temperature 25°C to 70°C
Current density 4 to 40 A/dm$^2$
Plating time 10 to 150 seconds
Presence/absence of stirring: Air stirring or jet stirring

Note that the addition of ammonia to the nickel plating bath may be conducted by use of ammonia water, ammonium chloride, or the like in place of ammonium sulfate. The ammonia concentration in the plating bath is preferably 6 to 35 g/L, more preferably 10 to 35 g/L, further preferably 16 to 35 g/L, and still further preferably 20 to 35 g/L. Besides, in order to control the chloride ion concentration, use may be made of a basic nickel carbonate compound, hydrochloric acid, sodium chloride, potassium chloride, or the like.

The three-dimensional surface property parameter Sa of the roughened nickel layer 50 is preferably 0.2 to 1.3 um as described above. To set the numerical value of the three-dimensional surface property parameter Sa of the roughened nickel layer 50 within this range, for example, control of surface roughness of the metallic base material 20, adjustment of the roughened nickel plating conditions and the thickness, adjustment of the ground nickel plating conditions and the thickness, adjustment of the coating nickel plating conditions and the thickness, and the like may be adopted.

Note that, as disclosed in WO2020/017655, as a post-stage of the roughened nickel plating, coating nickel plating may be performed to form the roughened nickel layer. Note that, as the coating nickel plating conditions, the contents disclosed in WO2020/017655 are applicable, so that detailed description thereof is omitted here.

«Examples»

The present invention will be described more specifically below by using Examples. First, measuring methods in Examples will be described.

[X-ray diffraction (XRD) measurement]

For the purpose of evaluating the state of an alloy which is contained in the surface treated steel foil 10 for the current collector and is composed of iron and nickel, X-ray diffraction (XRD) measurement was conducted. As an X-ray diffractometer, SmartLab made by Rigaku Corporation was used. The specimen was cut to 20 × 20 mm before use. As specific measuring conditions for X-ray diffraction, the following specifications were adopted.

<Device configuration>

·X-ray source: CuKα
·Goniometer radius: 300 nm
·Optical system: concentration method

(Incidence side slit system)

·Solar slit: 5°
·Longitudinal limit slit: 5 mm
·Divergence slit: 2/3°

(light reception side slit system)

·Scattering slit: 2/3°
·Solar slit: 5°
·Light reception slit: 0.3 mm
·Monochromating processing method: counter monochrometer method
·Detector: scintillation counter

<Measurement parameters>

·Target: Cu
·Tube voltage-tube current: 45 kV 200 mA
·Scanning axis: 2θ/θ (concentration method)
·Scanning mode: continuous
·Measurement range: 2Θ 40° to 100°
·Scanning rate: 10°/min
·Step: 0.02°

The diffraction intensity of the $Fe_1Ni_1(311)$ crystal plane was confirmed at the following diffraction angle 2Θ.
$Fe_1Ni_1(311)$ crystal plane: diffraction angle 2Θ = 91.23° ± 0.11°
The diffraction intensity of each crystal plane of iron was confirmed at the following diffraction angle 2Θ.
Fe(211) crystal plane: diffraction angle 2Θ = 82.33° ± 0.11°
In addition, for confirming whether or not the following formulas (2) and (3) are satisfied, the diffraction intensities on the following crystal planes of $Fe_1Ni_3$ and $Fe_3Ni_2$ were confirmed at the following diffraction angles 2Θ.
$Fe_1Ni_3(311)$ crystal plane: diffraction angle 2Θ = 91.97° ± 0.11°
$Fe_3Ni_2(311)$ crystal plane: diffraction angle 2Θ = 90.48° ± 0.11°

$$I(Fe_1Ni_1(311))/(I(Fe_1Ni_1(311)) + I(Fe_1Ni_3(311)) + I(Fe_3Ni_2(311))) \geq 0.2 \cdots (2)$$

$$I(Fe_1Ni_3(311))/(I(Fe_1Ni_1(311)) + I(Fe_1Ni_3(311)) + I(Fe_3Ni_2(311))) \leq 0.5 \cdots (3)$$

Note that $I(Fe_1Ni_1(311))/(I(Fe_1Ni_1(311)) + I(Fe_1Ni_3(311)) + I(Fe_3Ni_2(311)))$ is set forth in Tables 1 to 4 as the $Fe_1Ni_1(311)$ ratio.
In addition, $I(Fe_1Ni_3(311))/(I(Fe_1Ni_1(311)) + I(Fe_1Ni_3(311)) + I(Fe_3Ni_2(311)))$ is set forth in Tables 1 to 4 as the $Fe_1Ni_3(311)$ ratio.
Further, for determining the presence of the crystal structure of $Fe_3Ni_2$, the diffraction intensity was confirmed at a diffraction angle of 2Θ = 86° ± 0.5°.
In the case where the maximum value of diffraction intensity at a diffraction angle of 2Θ = 91.23° ± 0.11° as the $Fe_1Ni_1(311)$ crystal plane was a numerical value of not less than 1.5 times the average value of measurements at a diffraction angle of 2Θ = 86° ± 0.5°, that $Fe_1Ni_1$ was present is indicated in Tables 1 to 4.
In the case where the maximum value of diffraction intensity at a diffraction angle of 2Θ = 91.97° ± 0.11° as the $Fe_1Ni_3(311)$ crystal plane was a numerical value of not less than 1.5 times the average value of measurements at a diffraction angle of 2Θ = 86° ± 0.5°, that $Fe_1Ni_3$ was present is indicated in Tables 1 to 4.
In the case where the maximum value of diffraction intensity at a diffraction angle of 2Θ = 90.48° ± 0.11° as

the $Fe_3Ni_2$(311) crystal plane was a numerical value of not less than 1.5 times the average value of measurements at a diffraction angle of $2\Theta = 86° \pm 0.5°$, that $Fe_3Ni_2$ was present is indicated in Tables 1 to 4.

[Measuring method for three-dimensional surface property parameter (Sa)]

With respect to a plane of the roughened nickel layer 50 of the surface treated steel foil for the current collector, each three-dimensional surface property parameter (arithmetic mean height Sa) was measured by use of a laser microscope (3D measurement laser microscope LEXT OLS5000 made by Olympus Corporation) according to ISO 25178-2:2012.

Specifically, first, under the condition of the magnification of an objective lens of 100 (lens name: MPLAPON100XLEXT), an analysis image with a visual field of 128 $\times$ 128 um was obtained. Next, the thus obtained analysis image was subjected to noise removal and inclination correction which are automatic correction treatments by use of an analysis application.

Thereafter, an icon of surface roughness measurement was clicked to perform an analysis, to obtain each three-dimensional surface property parameter (arithmetic mean height Sa).

Note that filter conditions (F calculation, S filter, L filter) in analysis were not all set, and the analysis was conducted under the condition of nil.

The arithmetic mean height Sa was the average value of measurements in three visual fields.

[Measuring method for thickness of iron-nickel alloy layer after heat treatment]

Calculation of the thickness of the iron-nickel alloy layer was conducted by an analysis by SEM-EDX (device name SU8020 made by Hitachi High-Tech Corporation and EDAX made by AMETEK, Inc.), specifically by linear analysis of elemental analysis of Ni and Fe at a depth down to 15 um in the depth direction from a surface layer. Note that measurement conditions were an accelerating voltage of 15 kV, an observation magnification of 5,000, and a measurement step of 0.1 um. As depicted in FIG. 3, the axis of abscissas represents the distance (um) in the depth direction from the surface layer, the axis of ordinates represents X-ray intensity of Ni and Fe, and at parts around an intersection between a curve of nickel and a curve of iron, the distance between 1/10 times the maximum value of nickel and 1/10 times the maximum value of iron was deemed as the thickness of the iron-nickel alloy layer 30, and the thickness was read from the graph.

[Hydrogen permeation current density measuring method]

By use of the device depicted in FIG. 2, measurement was conducted using an evaluation sample as a working electrode and using Ag/AgCl as a reference electrode under the conditions of a potential on the hydrogen generation side (cathode side) of -1.5 V and a potential on the hydrogen detection side (anode side) of +0.4 V. Note that, as a detailed measuring method, measurement was conducted using the device depicted in FIG. 2(a) as described above. As a liquid electrolyte, use was made of an alkaline aqueous solution at 65°C, containing 6 mol/L of KOH as a main constituent and containing KOH, NaOH, and LiOH with a total concentration of KOH, NaOH, and LiOH of 7 mol/L. As a potentiostat, a "multi-electrochemical measurement system HZ-Pro" made by HOKUTO DENKO CORPORATION was used. First, a potential of +0.4 V was applied on the hydrogen detection side and was maintained for 60 minutes for stabilization of current value. Note that the hydrogen detection side was continuedly maintained at the same potential. Next, a potential was applied stepwise on the hydrogen invasion side as -0.7 V, -1.1 V, and -1.5 V, each of the potentials being applied for 15 minutes. Note that variation in oxidation current while the potential on the hydrogen invasion side was -1.5 V was regarded as a hydrogen permeation current density, which was an evaluation object in Examples and Comparative Examples. The measurement diameter was $\varphi$20 mm, and the measurement area was 3.14 $cm^2$.

The hydrogen permeation current density I ($\mu A/cm^2$) obtained from the following formula (1) was set forth in Table 1.

$$\text{Hydrogen permeation current density I } (\mu A/cm^2) =$$

$$((\text{average value of oxidation current from Ib to Ic})/S) -$$

$$((\text{average of Ia and Id})/S) \quad \cdots \quad (1)$$

where Ia ($\mu A$) is oxidation current at five seconds before application of -1.5 V, Ib ($\mu A$) is oxidation current at 155 seconds after the start of application of -1.5 V, Ic ($\mu A$) is oxidation current at end of application of -1.5 V, Id ($\mu A$) is

oxidation current at 155 seconds after the end of application of -1.5 V, and S ($cm^2$) is the measurement area (evaluation area).

<Example 1>

First, as the metallic base material 20, a cold rolled foil (50 um in thickness) of a low carbon aluminum-killed steel having the following composition was prepared.

C: 0.04 wt%, Mn: 0.32 wt%, Si: 0.01 wt%, P: 0.012 wt%, S: 0.014 wt%, the balance: Fe and unavoidable impurities

Next, the prepared base material was subjected to electrolytic degreasing and pickling by immersion in sulfuric acid, after which nickel plating was conducted on both surfaces under the following conditions, to form nickel plating layers having a target thickness of 2.0 um per one surface and a nickel deposition amount of 17.8 g/$m^2$ per one surface. Note that the conditions for the nickel plating were as follows.

(Conditions of Ni plating)

Bath composition: Watts bath
Nickel sulfate hexahydrate: 250 g/L
Nickel chloride hexahydrate: 45 g/L
Boric acid: 30 g/L
Bath temperature: 60°C
pH: 4.0 to 5.0
Stirring: air stirring or jet stirring
Current density: 10 A/$dm^2$

Note that the nickel deposition amount was measured by use of an X-ray fluorescence device (device name: ZSX100e, made by Rigaku Corporation), and the obtained numerical value is set forth in Table 1. Note that a specific measuring method is similar to the method described in WO2020/017655, and hence, detailed description thereof is omitted here.

Next, the steel foil having the nickel plating layer formed as described above was subjected to a heat treatment under the conditions of a heat treatment temperature of 640°C, a soaking time of two hours, a total time of eight hours, and a reducing atmosphere. By this heat treatment, a surface treated steel foil for a current collector that has iron-nickel alloy layers on both surface sides was obtained. The value of $I(Fe_1Ni_1(311))/I(Fe(211))$ was 0.306. Note that the calculated $Fe_1Ni_1(311)$ ratio and the calculated $Fe_1Ni_3(311)$ ratio are set forth in Table 1.

In addition, the thickness of the iron-nickel alloy layer was 2.6 um.

The surface treated steel foil thus obtained was subjected to formation of measurement nickel films on both surface sides. Thereafter, hydrogen permeation current density was measured. Note that the "measurement nickel film" is a film provided for the purpose of avoiding the influences exerted on the measuring conditions and measurements (oxidation current) by differences in surface state among Examples and Comparative Examples, and was formed under the following plating conditions.

The results obtained are set forth in Table 1.

<Measurement nickel plating conditions>

Bath composition: nickel sulfate hexahydrate 250 g/L, nickel chloride hexahydrate 45 g/L, boric acid 30 g/L

pH 4.0 to 5.0
Bath temperature 60°C
Current density 10A/$dm^2$

The target thickness of the measurement nickel layer was 1.0 um on each surface side.

As described above, a surface treated steel foil for a current collector was obtained. Note that the thickness of the surface treated steel foil for the current collector was 54 um in the state before the formation of the measurement nickel films, and was 56 um in the state after the formation of the measurement nickel films. The hydrogen permeation current density (oxidation current value) was 0.0 $\mu A/cm^2$. The results are set forth in Table 1.

<Example 2>

A process similar to that in Example 1 was conducted, except that the target thickness of the nickel plating layer to be formed on the steel foil was 1.0 um, and the heat treatment conditions at the time of forming the iron-nickel alloy layers were a heat treatment temperature of 560°C, a soaking time of six hours, and a total heat treatment time of 10 hours. The thickness of the iron-nickel alloy layer obtained was 2.3 um, and the value of $I(Fe_1Ni_1(311))/I(Fe(211))$ was 0.118. Note that the calculated $Fe_1Ni_1(311)$ ratio and the calculated $Fe_1Ni_3(311)$ ratio are set forth in Table 1.
In addition, the hydrogen permeation current density (oxidation current value) of the obtained surface treated steel foil for the current collector was 0.0 $\mu A/cm^2$. The results are set forth in Table 1.

<Example 3>

A process similar to that in Example 2 was conducted, except that the target thickness of the nickel plating layer to be formed on the steel foil was 0.6 um. The thickness of the iron-nickel alloy layer obtained was 1.8 um, and the value of $I(Fe_1Ni_1(311))/I(Fe(211))$ was 0.075. Note that the calculated $Fe_1Ni_1(311)$ ratio and the calculated $Fe_1Ni_3(311)$ ratio are set forth in Table 1.
In addition, the hydrogen permeation current density (oxidation current value) of the obtained surface treated steel foil for the current collector was 1.1 $\mu A/cm^2$. The results are set forth in Table 1.

<Example 4>

A process similar to that in Example 1 was conducted, except that the thickness of a cold rolled foil as the metallic base material 20 was 60 um, the target thickness of the nickel plating layer to be formed on the steel foil was 1.0 um, the heat treatment at the time of forming the iron-nickel alloy layers was continuous annealing at 900°C with a soaking time of 40 seconds. The thickness of the iron-nickel alloy layer obtained was 2.1 um, and the value of $I(Fe_1Ni_1(311))/I(Fe(211))$ was 0.028. Note that the calculated $Fe_1Ni_1(311)$ ratio and the calculated $Fe_1Ni_3(311)$ ratio are set forth in Table 1.
In addition, the hydrogen permeation current density (oxidation current value) of the obtained surface treated steel foil for the current collector was 2.4 $\mu A/cm^2$. The results are set forth in Table 1.

<Example 5>

A process similar to that in Example 1 was conducted, except that the target thickness of the nickel plating layer to be formed on the steel foil was 0.5 um, and the heat treatment conditions at the time of forming the iron-nickel alloy layers were a heat treatment temperature of 480°C, a soaking time of four hours, and a total time of eight hours. The thickness of the iron-nickel alloy layer obtained was 1.0 um, and the value of $I(Fe_1Ni_1(311))/I(Fe(211))$ was 0.018. Note that the calculated $Fe_1Ni_1(311)$ ratio and the calculated $Fe_1Ni_3(311)$ ratio are set forth in Table 1.
In addition, the hydrogen permeation current density (oxidation current value) of the obtained surface treated steel foil for the current collector was 7.8 $\mu A/cm^2$. The results are set forth in Table 1.

<Example 6>

A process similar to that in Example 5 was conducted, except that the target thickness of the nickel plating layer to be formed on the steel foil was 1.0 um. The thickness of the iron-nickel alloy layer obtained was 2.1 um, and the value of $I(Fe_1Ni_1(311))/I(Fe(211))$ was 0.019. Note that the calculated $Fe_1Ni_1(311)$ ratio and the calculated $Fe_1Ni_3(311)$ ratio are set forth in Table 1.
In addition, the hydrogen permeation current density (oxidation current value) of the obtained surface treated steel foil for the current collector was 10.9 $\mu A/cm^2$. The results are set forth in Table 1.

<Example 7>

After a heat treatment was conducted by the continuous annealing in Example 4, formation of the measurement nickel films was not performed, and ground nickel layers were formed on the iron-nickel alloy layers on both surface sides under the following conditions. Note that, also after the ground nickel layer forming step, measurement was similarly conducted by an X-ray fluoroscopy device, to determine the total nickel deposition amount.

<Ground nickel plating conditions>

Bath composition: nickel sulfate hexahydrate 250 g/L, nickel chloride hexahydrate 45 g/L, boric acid 30 g/L

pH 4.2
Bath temperature 60°C
Current density 10A/dm$^2$
Plating time 30 seconds

The target thickness of the ground nickel layers was 1 um per one surface side as indicated in Table 2.

The value of I(Fe$_1$Ni$_1$(311))/I(Fe(211)) obtained by X-ray diffraction after the formation of the ground nickel layers was 0.035. Note that the calculated Fe$_1$Ni$_1$(311) ratio and the calculated Fe$_1$Ni$_3$(311) ratio are set forth in Table 2.

In addition, the hydrogen permeation current density (oxidation current value) of the obtained surface treated steel foil for the current collector was 2.4 $\mu$A/cm$^2$. The results are set forth in Table 2. Note that, at the time of measurement of the hydrogen permeation current density in Example 7, further provision of measurement nickel films was not conducted, and the measurement was performed as the ground nickel layers were exposed.

<Example 8>

On the ground nickel layer formed in Example 7, roughened nickel plating and coating nickel plating were conducted under the following conditions, to form a roughened nickel layer. Note that the roughened nickel layer was formed on only one surface side.

<Roughened nickel plating conditions>

Concentration of nickel sulfate hexahydrate in plating bath: 10 g/L
Concentration of nickel chloride hexahydrate in plating bath: 10 g/L
Concentration of chloride ions in plating bath: 3 g/L
Ratio between nickel ions and ammonium ions in plating bath: nickel ions/ammonium ions (weight ratio) = 0.17
pH: 6
Bath temperature: 50°C
Current density: 12 A/dm$^2$
Plating time: 60 seconds

<Coating nickel plating conditions>

Bath composition: nickel sulfate hexahydrate 250 g/L, nickel chloride hexahydrate 45 g/L, boric acid 30 g/L
pH: 4.0 to 5.0
Bath temperature: 60°C
Current density: 5 A/dm$^2$
Plating time: 36 seconds

The value of I(Fe$_1$Ni$_1$(311))/I(Fe(211)) obtained by X-ray diffraction measurement after the formation of the roughened nickel layer, namely, after the coating nickel plating, was 0.040. Note that the calculated Fe$_1$Ni$_1$(311) ratio and the calculated Fe$_1$Ni$_3$(311) ratio are set forth in Table 2.

In addition, the hydrogen permeation current density (oxidation current value) of the obtained surface treated steel foil for the current collector with the roughened nickel layer side as the detection surface was 2.3 $\mu$A/cm$^2$. Note that, at the time of measurement of the hydrogen permeation current density in Example 8, further provision of measurement nickel films was not conducted, and the measurement was performed as the roughened nickel layer was exposed on one surface side and the ground nickel layer was exposed on another surface side. The results are set forth in Table 2.

In the case where a roughened layer is formed on the test piece, there may be a case in which the measurement of the hydrogen permeation current density cannot be performed normally, due to leaching of the liquid electrolyte through gaps of roughening. Hence, in order to restrain the influence of the leaching of the liquid electrolyte through the gaps of roughening, prior to the setting of the measurement cells, a polypropylene resin in which a circle with a measurement diameter of $\varphi 20$ mm was cut out was adhered to the surface where the roughened layer was formed, while being positioned to a measurement position, and the test piece was disposed between the measurement cells. As the polypropylene resin, a film having a thickness of 70 $\mu$m was used, and it was adhered by a thermocompression adhesion method of pressing for three seconds under the conditions of 170°C and 0.1 to 0.4 MPa.

<Example 9>

A process similar to that in Example 8 was conducted, except that the nickel deposition amount in the roughened nickel layer was as set forth in Table 2. The value of $I(Fe_1Ni_1(311))/I(Fe(211))$ was 0.045. Note that the calculated $Fe_1Ni_1(311)$ ratio and the calculated $Fe_1Ni_3(311)$ ratio are set forth in Table 2.

In addition, the hydrogen permeation current density (oxidation current value) of the obtained surface treated steel foil for the current collector was 2.3 $\mu$A/cm$^2$. The results are set forth in Table 2.

<Example 10(a)>

A process similar to that in Example 2 was conducted, except that the target thickness of the nickel plating layers to be formed on the steel foil was 0.25 um on the 10a surface side and 0.1 um on the 10b surface side. The value of $I(Fe_1Ni_1(311))/I(Fe(211))$ obtained by X-ray diffraction analysis with the 10a surface side as the measurement surface was 0.056. Note that the calculated $Fe_1Ni_1(311)$ ratio and the calculated $Fe_1Ni_3(311)$ ratio are set forth in Table 3.

In addition, the hydrogen permeation current density (oxidation current value) of the obtained surface treated steel foil for the current collector with the 10a surface side as the detection surface was 2.9 $\mu$A/cm$^2$. The results are set forth in Table 3.

<Example 10(b)>

The results of a process in which the measurement surface of X-ray diffraction measurement and the detection surface of the hydrogen permeation current density were the 10b surface side, in Example 10(a), were set forth in Table 3.

<Example 11>

A metallic base material was subjected to iron-nickel alloy plating under the following conditions, to obtain a surface treated steel foil having iron-nickel alloy layers with a target thickness of 1.0 um on both surface sides.

(Iron-nickel alloy plating conditions)

Bath composition

Nickel sulfate hexahydrate: 185 g/L
Iron sulfate heptahydrate: 65 g/L
Nickel chloride hexahydrate: 45 g/L
Boric acid: 30 g/L
Trisodium citrate: 10 g/L
Sodium saccharin: 3 g/L
Anti-pitting agent: 1 ml/L

·Temperature: 60°C
·pH: 2.5 to 3.0
·Stirring: air stirring
·Current density: 15 A/dm$^2$

After the alloy plating, a heat treatment was conducted by continuous annealing at 900°C with a soaking time of 20 seconds. In points other than these, a process similar to that in Example 1 was conducted. The value of $I(Fe_1Ni_1(311))/I(Fe(211))$ was 0.042. Note that the calculated $Fe_1Ni_1(311)$ ratio and the calculated $Fe_1Ni_3(311)$ ratio are set forth in Table 4.

In addition, the hydrogen permeation current density (oxidation current value) of the obtained surface treated steel foil for the current collector was 7.2 $\mu$A/cm$^2$. The results are set forth in Table 4.

<Example 12>

A process similar to that in Example 1 was conducted, except that the thickness of a cold rolled foil as the metallic base material 20 was 60 um, the target thickness of the nickel plating layers to be formed on the steel foil was 0.39 um, the heat treatment conditions at the time of forming the iron-nickel alloy layers were a heat treatment temperature of 560°C, a soaking time of eight hours, and a total heat treatment time of 80 hours, and cold rolling with a draft of 17.70 was performed after the heat treatment. Note that the measurement of the Ni deposition amount by an X-ray fluorescence was conducted after the cold rolling. The thickness of the iron-nickel alloy layer obtained was 1.3 um, and the value of I(Fe$_1$Ni$_1$(311))/I(Fe(211)) was 0.070. Note that the calculated Fe$_1$Ni$_1$(311) ratio and the calculated Fe$_1$Ni$_3$(311) ratio are set forth in Table 1. In addition, the crystal orientation index of Fe$_1$Ni$_1$(220) was 1.51. Besides, the hydrogen permeation current density (oxidation current value) of the obtained surface treated steel foil for the current collector was 1.5 $\mu$A/cm$^2$. The results are set forth in Table 1.

<Comparative Example 1>

A process similar to that in Example 4 was conducted, except that the heat treatment at the time of forming the iron-nickel alloy layers was continuous annealing at 900°C with a soaking time of 18 seconds. The thickness of the iron-nickel alloy layer obtained was 1.5 um, and the value of I(Fe$_1$Ni$_1$(311))/I(Fe(211)) was 0.014. Note that the calculated Fe$_1$Ni$_1$(311) ratio and the calculated Fe$_1$Ni$_3$(311) ratio are set forth in Table 1.
In addition, the hydrogen permeation current density (oxidation current value) of the obtained surface treated steel foil for the current collector was 26.0 $\mu$A/cm$^2$. The results are set forth in Table 1.

<Comparative Example 2>

A process similar to that in Example 1 was conducted, except that the target thickness of the nickel plating layers was 1.0 um, and the steel foil having the nickel plating layers was not subjected to a heat treatment. The value of I(Fe$_1$Ni$_1$(311))/I(Fe(211)) of the nickel plating layers was 0.010, but, in the first place, the value at a diffraction angle of $2\Theta = 91.23° \pm 0.01°$ was less than 1.5 times the average value of measurement at $2\Theta = 86° \pm 0.5°$, and a diffraction intensity of Fe$_1$Ni$_1$ failed to be obtained. In addition, the hydrogen permeation current density (oxidation current value) of the obtained surface treated steel foil for the current collector was 285.0 $\mu$A/cm$^2$. The results are set forth in Table 1.

[Table 1]

| Example/ Comparative Example | Base material | FeNi alloy layer | | | | | | | | | | | Evaluation |
| | | 10a surface_Ni thickness before heat treatment [μm] | 10b surface presence or absence of Ni and Ni thickness before heat treatment [μm] | Heat treatment temperature [°C] | Heat treatment time | FeNi alloy layer thickness [μm] | Ni deposition amount g/m$^2$ | Presence or absence of Fe$_1$Ni$_1$ | Fe$_1$Ni$_1$ (311)/ Fe(211) | Fe$_1$Ni$_1$ (311) ratio | Fe$_1$Ni$_3$ (311) ratio | Presence or absence of Fe$_1$Ni$_3$or Fe$_3$Ni$_2$ | Hydrogen permeation current density [μA/cm$^2$] |
|---|---|---|---|---|---|---|---|---|---|---|---|---|---|
| Example 1 | steel foil | 2.0 | present (2.0) | 640 | 2 hours | 2.6 | 17.8 | present | 0.306 | 0.375 | 0.336 | present | 0.0 |
| Example 2 | steel foil | 1.0 | present (1.0) | 560 | 6 hours | 2.3 | 8.9 | present | 0.118 | 0.459 | 0.311 | present | 0.0 |
| Example 3 | steel foil | 0.6 | present (0.6) | 560 | 6 hours | 1.8 | 5.3 | present | 0.075 | 0.542 | 0.159 | present | 1.1 |
| Example 4 | steel foil | 1.0 | present (1.0) | 900 | 40 seconds | 2.1 | 8.9 | present | 0.028 | 0.317 | 0.429 | present | 2.4 |
| Example 5 | steel foil | 0.5 | present (0.5) | 480 | 4 hours | 1.0 | 4.5 | present | 0.018 | 0.271 | 0.400 | present | 7.8 |
| Example 6 | steel foil | 1.0 | present (1.0) | 480 | 4 hours | 2.1 | 8.9 | present | 0.019 | 0.224 | 0.506 | present | 10.9 |
| Example 12 | steel foil | 0.39 | present (0.39) | 560 | 8 hours | 1.3 | 2.9 * | present | 0.070 | 0.510 | 0.240 | present | 1.5 |
| Comparative Example 1 | steel foil | 1.0 | present (1.0) | 900 | 18 seconds | 1.5 | 8.9 | present | 0.014 | 0.277 | 0.362 | present | 26.0 |
| Comparative Example 2 | steel foil | 1.0 | present (1.0) | no data | no data | 0.7 | 8.9 | absent | - | - | - | absent | 285.0 |

*Deposition amount after cold rolling

EP 4 332 274 A1

[Table 2(a)]

| Example/ Comparative Example | Base material | 10a surface_ Ni thickness before heat treatment [$\mu$m] | 10b surface presence or absence of Ni and Ni thickness before heat treatment [$\mu$m] | FeNi alloy layer | | | | | | | |
|---|---|---|---|---|---|---|---|---|---|---|---|
| | | | | Heat treatment temperature [°C] | Heat treatment time | FeNi alloy layer thickness [$\mu$m] | Ni deposition amount g/m$^2$ | $Fe_1Ni_1$ (311) /Fe (211) | $Fe_1Ni_1$ (311) ratio | $Fe_1Ni_3$ (311) ratio | Presence or absence of $Fe_3Ni_2$ |
| Example 7 | steel foil | 1.0 | present (1.0) | 900 | 40 seconds | 2.1 | 8.9 | 0.035 | 0.333 | 0.422 | present |
| Example 8 | steel foil | 1.0 | present (1.0) | 900 | 40 seconds | 2.1 | 8.9 | 0.040 | 0.264 | 0.415 | present |
| Example 9 | steel foil | 1.0 | present (1.0) | 900 | 40 seconds | 2.1 | 8.9 | 0.045 | 0.283 | 0.348 | present |

[Table 2(b)]

| Example/ Comparative Example | Metallic layer | | | | | Evaluation |
|---|---|---|---|---|---|---|
| | Ground Ni thickness after heat treatment [$\mu$m] | Roughened Ni deposition amount after heat treatment [g/m$^2$] | Coating Ni deposition amount after heat treatment [g/m$^2$] | Total Ni deposition amount with alloy layer (g/m$^2$) | Roughened Ni surface Sa [$\mu$m] | Hydrogen permeation current density [$\mu$A/cm$^2$] |
| Example 7 | 1 | no data | no data | 17.8 | 0.283 | 2.4 |
| Example 8 | 1 | 11.6 | 5.3 | 34.7 | 0.659 | 2.3 |
| Example 9 | 1 | 15.1 | 5.3 | 38.2 | 0.902 | 2.3 |

[Table 3]

| Example/ Comparative Example | Base material | FeNi alloy layer | | | | | | | | | | Metallic layer | | Evaluation |
| | | Ni thickness before heat treatment [$\mu$m] object surface/back surface | Heat treatment temperature [°C] | Heat treatment time | FeNi alloy layer thickness [$\mu$m] object surface/back surface [$\mu$m] | Ni deposition amount g/m2 object surface/ back surface | Presence or absence of $Fe_1Ni_1$ | $Fe_1Ni_1$ (311) /Fe (211) | $Fe_1Ni_1$ (311) ratio | $Fe_1Ni_3$ (311) ratio | Presence or absence of $Fe_3Ni_2$ | Ground Ni thickness after heat treatment [$\mu$m] (object surface) | Total Ni deposition amount with alloy layer (g/m2) (object surface) | Hydrogen permeation current density [$\mu$A/cm2] |
|---|---|---|---|---|---|---|---|---|---|---|---|---|---|---|
| Example 10 (a) (10a surface side) | steel foil | 0.25/0.1 | 560 | 6 hours | 0.7/0.3 | 2.22/0.89 | present | 0.056 | 0.560 | 0.120 | present | 1 | 11.12 | 2.9 |
| Example 10 (b) (10b surface side) | steel foil | 0.1/0.25 | 560 | 6 hours | 0.3/0.7 | 0.89/2.22 | present | 0.016 | 0.444 | 0.194 | present | 1 | 9.79 | 2.9 |

[Table 4]

| Example/ Comparative Example | Base material | FeNi alloy layer | | | | | | | | | | Evaluation |
|---|---|---|---|---|---|---|---|---|---|---|---|---|
| | | 10a surface_ FeNi thickness before heat treatment [$\mu$m] | 10b surface presence or absence of Ni and Ni thickness before heat treatment [$\mu$m] | Heat treatment tem perature [°C] | Heat treatment time | Ni deposition amount g/m$^2$ | $Fe_1Ni_1$ (311) /Fe (211) | $Fe_1Ni_1$ (311) ratio | $Fe_1Ni_3$ (311) ratio | Presence or absence of $Fe_3Ni_2$ | | Hydrogen permeation current density [$\mu$A/cm$^2$] |
| Example 11 | steel foil | 1.0 | present (1.0) | 900 | 20 seconds | 4.45 | 0.042 | 0.280 | 0.060 | present | | 7.2 |

It was confirmed that each of Examples had favorable hydrogen barrier properties. On the other hand, it was confirmed that Comparative Examples failed to achieve the object in terms of hydrogen barrier properties.

In other words, it was found that, in each of Examples in which $Fe_1Ni_1(311)/Fe(211)$ in X-ray diffraction was not less than 0.015 and so the presence of $Fe_1Ni_1$ is clear, the hydrogen permeation current density is remarkably small, hydrogen permeation can be restrained more stably, and particularly excellent hydrogen barrier properties are realized. Further, it is considered that, when $Fe_1Ni_1(311)/Fe(211)$ is not less than 0.020, the hydrogen permeation current density becomes not more than 10 $\mu A/cm^2$, a reduction of a lowering in battery performance can be more expected, and an enhancement in battery performance after the lapse of time is expected as compared to conventional batteries.

In addition, in each of Examples 1 to 6, Example 10(a), and Example 10(b), the measurement nickel film having a thickness of 1 um was provided for unifying the surface state as confirmation of the effect of $Fe_1Ni_1$, but it was found that the effect for hydrogen barrier properties is produced not by the effect of the nickel film but by the effect of the amount of $Fe_1Ni_1$ present in the alloy layer. Hence, while the nickel film as plated on the surface is not indispensable to the actual form, from the viewpoint of hydrogen barrier properties, it was also found that, even when a nickel plating layer in a preferable thickness is formed as an upper layer of the alloy layer for another purpose, the nickel plating layer does not impede the hydrogen barrier properties.

Similarly, it was found that, in Example 8 and Example 9, even when a roughened nickel layer is formed, the roughened nickel layer does not impede the hydrogen barrier properties.

In addition, in Example 10(a) and Example 10(b), it was found out that, when the amount of $Fe_1Ni_1$ present in the iron-nickel alloy layer is not less than a predetermined amount, an effect of hydrogen barrier properties is present, irrespective of the position where the iron-nickel alloy layer is formed in the hydrogen invasion direction.

Further, in Example 11, it was found out that, also in the iron-nickel alloy layer having undergone a heat treatment, if the presence of $Fe_1Ni_1$ is not less than a predetermined level, hydrogen barrier properties are obtained.

Further, in Example 12, it was found out that, even in the case where rolling with a draft of not more than 25% is performed after the formation of the iron-nickel alloy layers, the obtained surface treated steel foil for the current collector has a configuration of satisfying the formula (1), and more favorable hydrogen barrier properties are not impeded.

In addition, under a strong alkali environment in measurement of the hydrogen permeation current density in the present embodiment and in a state in which a potential of +0.4 V is applied on the hydrogen detection side, a peak indicative of dissolution does not appear, and the oxidation current as the background is stable, so that it can be said that the present embodiment also has liquid electrolyte resistance. Note that, even in a state in which the measurement nickel film is absent, the tendency of the oxidation current as the background was similar to the above.

Note that the present embodiment and each of Examples may variously be modified within such a scope as not to depart from the gist of the present invention.

In addition, while the surface treated steel foil for the current collector in the above embodiment and Examples has been described to be used mainly for the current collector of the secondary battery of the bipolar structure, the application of the surface treated steel foil for the current collector of the present invention is not limited to the current collector of the secondary battery of the bipolar structure. The steel foil is applicable also to a current collector of a battery using a hydrogen occluding alloy and can suitably be used since it has hydrogen barrier properties effective even in severe environments such as in-vehicle batteries.

[Industrial Applicability]

As has been described above, the surface treated steel foil for the current collector of the present invention is applicable to current collectors of various batteries required to have hydrogen barrier properties. Further, in the case where the surface treated steel foil of the present invention is used for in-vehicle batteries or the like, it is possible to contribute especially to reduction of fuel cost.

[Reference Signs List]

| | |
|---|---|
| 10: | Surface treated steel foil for current collector |
| 10a: | First surface |
| 10b: | Second surface |
| 20: | Metallic base material |
| 30: | Iron-nickel alloy layer |
| 40: | Metallic layer |
| 50: | Roughened nickel layer |
| Ch1: | Potentiostat |

Ch2:    Potentiostat

**Claims**

1. A surface treated steel foil for a current collector, the surface treated steel foil having a first surface and a second surface located on a side opposite to the first surface, the surface treated steel foil comprising:

    a base material formed of a steel; and
    an iron-nickel alloy layer laminated on the base material on the first surface side and/or the second surface side, wherein $Fe_1Ni_1$ is contained as an alloy phase in the iron-nickel alloy layer, and, with respect to the surface that includes the iron-nickel alloy layer, a ratio between a maximum value of diffraction intensity of a $Fe_1Ni_1(311)$ plane and a maximum value of diffraction intensity of a $Fe(211)$ plane in X-ray diffraction satisfies a following formula (1):

$$I(Fe_1Ni_1(311))/I(Fe(211)) \geq 0.015 \cdots (1)$$

2. The surface treated steel foil for a current collector according to claim 1, wherein at least one of $Fe_1Ni_3$ and $Fe_3Ni_2$ is further contained as an alloy phase in the iron-nickel alloy layer.

3. The surface treated steel foil for a current collector according to claim 2, wherein, with respect to the surface including the iron-nickel alloy layer, a ratio of the maximum value of diffraction intensity of the $Fe_1Ni_1(311)$ plane, a maximum value of diffraction intensity of a $Fe_1Ni_3(311)$ plane, and a maximum value of diffraction intensity of a $Fe_3Ni_2(311)$ plane in X-ray diffraction satisfies a following formula (2):

$$I(Fe_1Ni_1(311))/(I(Fe_1Ni_1(311)) + I(Fe_1Ni_3(311)) +$$

$$I(Fe_3Ni_2(311))) \geq 0.2 \cdots (2)$$

4. The surface treated steel foil for a current collector according to claim 2 or 3, wherein, with respect to the surface including the iron-nickel alloy layer, the ratio of the maximum value of diffraction intensity of the $Fe_1Ni_1(311)$ plane, the maximum value of diffraction intensity of the $Fe_1Ni_3(311)$ plane, and the maximum value of diffraction intensity of the $Fe_3Ni_2(311)$ plane satisfies a following formula (3):

$$I(Fe_1Ni_3(311))/(I(Fe_1Ni_1(311)) + I(Fe_1Ni_3(311)) +$$

$$I(Fe_3Ni_2(311))) \leq 0.5 \cdots (3)$$

5. The surface treated steel foil for a current collector according to any one of claims 1 to 4, wherein a thickness of the surface treated steel foil as a whole is not more than 300 um.

6. The surface treated steel foil for a current collector according to any one of claims 1 to 5, wherein the base material is a low carbon steel or an ultra-low carbon steel.

7. The surface treated steel foil for a current collector according to any one of claims 1 to 6, wherein a deposition amount of nickel in the iron-nickel alloy layer is 0.8 to 53.4 $g/m^2$.

8. The surface treated steel foil for a current collector according to any one of claims 1 to 7,

    wherein the iron-nickel alloy layer is formed on both the first surface side and the second surface side, and
    a total of deposition amounts of nickel in the iron-nickel alloy layers on both surface sides is 1.5 to 53.5 $g/m^2$.

9. The surface treated steel foil for a current collector according to any one of claims 1 to 8, further comprising:
    a metallic layer formed on the iron-nickel alloy layer, the metallic layer being a nickel layer.

10. The surface treated steel foil for a current collector according to claim 9, wherein a total of nickel deposition amounts in the iron-nickel alloy layer and the nickel layer per one surface is 2.0 to 53.4 g/m$^2$.

11. The surface treated steel foil for a current collector according to any one of claims 1 to 10,

   wherein a hydrogen permeation current density that is electrochemically measured is not more than 15 $\mu$A/cm$^2$, where the hydrogen permeation current density is an increment of an oxidation current measured on a hydrogen detection side when a potential of -1.5 V is applied on a hydrogen generation side under a condition in which a potential on the hydrogen detection side is +0.4 V, in a liquid electrolyte at 65°C while a reference electrode for potentials on the hydrogen detection side and the hydrogen generation side is set to be Ag/AgCl.

12. The surface treated steel foil for a current collector according to any one of claims 1 to 11, wherein a roughened nickel layer is formed at an outermost surface on the first surface side or the second surface side, and a three-dimensional surface property parameter Sa of the roughened nickel layer is 0.2 to 1.3 um.

13. The surface treated steel foil for a current collector according to any one of claims 1 to 12, the surface treated steel foil having a first surface on which a hydrogen occluding alloy is disposed and a second surface located on a side opposite to the first surface, the surface treated steel foil comprising:

   a base material formed of a steel; and
   an iron-nickel alloy layer that is laminated on the base material on the first surface side and/or the second surface side and that restrains permeation or diffusion of hydrogen in the surface treated steel foil.

FIG. 1(a)

FIG. 1(b)

FIG. 1(c)

10

10b

30

20

30

10a

FIG. 2(a)

FIG. 2(b)

EVALUATION WINDOW
MEASUREMENT DIAMETER

φ20mm

FIG. 2(c)

FIG. 2(d)

Ia: OXIDATION CURRENT AT 5 s BEFORE APPLICATION OF -1.5 V
Ib: OXIDATION CURRENT AT 155 s AFTER START OF APPLICATION OF -1.5 V
Ic: OXIDATION CURRENT AT END OF APPLICATION OF -1.5 V
Id: OXIDATION CURRENT AT 155 s AFTER END OF APPLICATION OF -1.5 V

A: AVERAGE CURRENT DENSITY FROM Ib TO Ic
B: BACKGROUND (AVERAGE CURRENT DENSITY OF Ia AND Id)
A-B: HYDROGEN PERMEATION CURRENT DENSITY I ($\mu$A/cm$^2$)

FIG. 2(e)

FIG. 3

FIG. 4

FIG. 5(a)

FIG. 5(b)

10

10b

30

20

10a

50

FIG. 6

### INTERNATIONAL SEARCH REPORT

| | International application No. |
|---|---|
| | **PCT/JP2022/019465** |

**A. CLASSIFICATION OF SUBJECT MATTER**

*C25D 7/06*(2006.01)i; *C25D 5/12*(2006.01)i; *C25D 5/16*(2006.01)i; *C25D 5/26*(2006.01)i; *C25D 5/50*(2006.01)i; *H01M 4/66*(2006.01)i

FI: C25D7/06 Z; C25D5/12; C25D5/16; C25D5/26 E; C25D5/26 L; C25D5/50; H01M4/66 A

According to International Patent Classification (IPC) or to both national classification and IPC

**B. FIELDS SEARCHED**

Minimum documentation searched (classification system followed by classification symbols)

C25D7/06; C25D5/12; C25D5/16; C25D5/26; C25D5/50; H01M4/66

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2013/157600 A1 (NIPPON STEEL & SUMITOMO METAL CORPORATION) 24 October 2013 (2013-10-24) comparative example 31 | 1-7, 11 |
| A | | 8-10, 12-13 |
| A | JP 2017-47466 A (NIPPON STEEL & SUMITOMO METAL CORPORATION) 09 March 2017 (2017-03-09) | 1-13 |
| A | JP 2007-5092 A (MATSUSHITA ELECTRIC IND CO LTD) 11 January 2007 (2007-01-11) | 1-13 |
| A | WO 2021/075253 A1 (TOYO KOHAN CO., LTD.) 22 April 2021 (2021-04-22) | 1-13 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 332 274 A1

## INTERNATIONAL SEARCH REPORT
### Information on patent family members

International application No.

**PCT/JP2022/019465**

| Patent document cited in search report | | | Publication date (day/month/year) | Patent family member(s) | | | Publication date (day/month/year) |
|---|---|---|---|---|---|---|---|
| WO | 2013/157600 | A1 | 24 October 2013 | US | 2014/0287259 | A1 | |
| | | | | comparative Example 31 | | | |
| | | | | EP | 2770079 | A1 | |
| | | | | CN | 103917684 | A | |
| | | | | KR | 10-2014-0108214 | A | |
| JP | 2017-47466 | A | 09 March 2017 | (Family: none) | | | |
| JP | 2007-5092 | A | 11 January 2007 | US | 2009/0269661 | A1 | |
| | | | | WO | 2006/137403 | A1 | |
| | | | | EP | 1909342 | A1 | |
| | | | | CN | 101180748 | A | |
| | | | | KR | 10-2008-0005512 | A | |
| WO | 2021/075253 | A1 | 22 April 2021 | (Family: none) | | | |

Form PCT/ISA/210 (patent family annex) (January 2015)

## REFERENCES CITED IN THE DESCRIPTION

**Patent documents cited in the description**

- JP 2020053401 A
- WO 2021020338 A
- WO 2020017655 A

**Non-patent literature cited in the description**

- Electrochemical Measurements for Hydrogen Entry and Permeation of Steel. **TOORU TSURU.** Zairyo-to-Kankyo (Materials and Environments). Tokyo Institute Of Technology, 2014, vol. 63, 3-9